(19) Europäisches Patentamt / European Patent Office / Office européen des brevets

(11) **EP 4 561 238 A1**

(12) **EUROPEAN PATENT APPLICATION**
published in accordance with Art. 153(4) EPC

(43) Date of publication:
**28.05.2025 Bulletin 2025/22**

(21) Application number: **23843201.7**

(22) Date of filing: **27.06.2023**

(51) International Patent Classification (IPC):
*H04W 72/20* (2023.01)   *H04W 72/04* (2023.01)
*H04W 72/12* (2023.01)   *H04W 4/40* (2018.01)
*H04W 92/18* (2009.01)   *H04L 5/00* (2006.01)
*H04L 27/26* (2006.01)

(52) Cooperative Patent Classification (CPC):
**H04L 5/00; H04L 27/26; H04W 4/40; H04W 72/04;
H04W 72/12; H04W 72/20; H04W 92/18**

(86) International application number:
**PCT/KR2023/008928**

(87) International publication number:
**WO 2024/019349 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.07.2022 KR 20220088177**

(71) Applicant: **Innovative Technology Lab Co., Ltd.
Seocho-gu, Seoul 06744 (KR)**

(72) Inventor: **PARK, Dong Hyun
Seoul 06744 (KR)**

(74) Representative: **Diehl & Partner
Patent- und Rechtsanwaltskanzlei mbB
Erika-Mann-Straße 9
80636 München (DE)**

(54) **METHOD AND DEVICE FOR PERFORMING SIDELINK COMMUNICATION IN WIRELESS COMMUNICATION SYSTEM**

(57)   A method of configuring a sidelink resource pool in a user equipment (UE) in a wireless communication system may include receiving, by the UE, resource pool configuration information from a base station based on higher layer signaling; transmitting sidelink control information (SCI) to another UE based on the resource pool configuration information; and performing sidelink communication with the other UE, and the resource pool configuration information may be information that is based on sidelink resource pool configuration of an unlicensed band.

**FIG. 20**

**Description**

TECHNICAL FIELD

The present disclosure relates to a method and apparatus for performing sidelink communication in a wireless communication system.

RELATED ART

The International Mobile Telecommunication (IMT) framework and standard have been developed by the International Telecommunication Union (ITU). Also, a continuous discussion about 5-th generation (5G) communication is ongoing through a program called "IMT for 2020 and beyond."

To satisfy the requirements requested by "IMT for 2020 and beyond," various proposals have been made to support various numerologies about a time-frequency resource unit standard by considering various scenarios, service requirements, and potential system compatibility in a 3-rd Generation Partnership Project (3GPP) new radio (NR) system.

Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Also, Vehicle-to-everything (V2X) communication, a communication method of exchanging or sharing road infrastructures during driving and information, such as traffic conditions, through communication with other vehicles, may be considered. V2X may include, for example, vehicle-to-vehicle (V2V), which may refer to a long term evolution (LTE)-based/New Radio (NR) based communication between vehicles, vehicle-to-pedestrian (V2P), which may refer to LTE-based/NR-based communication between a vehicle and a user equipment (UE) carried by a user, and a vehicle-to-infrastructure/network (V2I/N), which may refer to a LTE-based/NR-based communication between a vehicle and a roadside unit (RSU)/network. The RSU may be a transportation infrastructure entity configured by a base station or a fixed UE, such as, an entity that transmits a speed notification to a vehicle.

DETAILED DESCRIPTION

TECHNICAL SUBJECT

A technical subject of the present disclosure relates to a method and apparatus for performing sidelink (SL) communication in a wireless communication system.

A technical subject of the present disclosure relates to a method and apparatus for configuring an SL resource pool in an unlicensed band.

A technical subject of the present disclosure relates to a method and apparatus for configuring an SL resource pool in an unlicensed band based on a resource block set (RBS) and an interlace/subchannel.

A technical subject of the present disclosure relates to a method and apparatus for allocating an SL interlace index based on a common resource block (CRB).

A technical subject of the present disclosure relates to a method and apparatus for mapping an SL interlace index and a subchannel index.

A technical subject of the present disclosure relates to a method and apparatus for indicating an SL resource pool configured in an unlicensed band.

A technical subject of the present disclosure relates to a method and apparatus for configuring an SL resource pool in an unlicensed band in consideration of a region-specific regulation.

Technical subjects achievable from the present disclosure are not limited to the aforementioned technical subjects and still other technical subjects not described herein may be clearly understood by one of ordinary skill in the art to which the disclosure pertains from the following description.

TECHNICAL SOLUTION

According to an aspect of the present disclosure, a method of configuring a sidelink resource pool in a user equipment (UE) in a wireless communication system may include receiving, by the UE, resource pool configuration information from a base station based on higher layer signaling; transmitting sidelink control information (SCI) to another UE based on the resource pool configuration information; and performing sidelink communication with the other UE, and the resource pool configuration information may be information that is based on sidelink resource pool configuration of an unlicensed band.

Also, according to an aspect of the present disclosure, the sidelink resource pool configuration information of the unlicensed band may include at least one of resource block set (RBS) configuration and index information, interlace configuration and index information, and subchannel configuration and index information based on a single sidelink bandwidth part (SL BWP) in a single carrier bandwidth.

Also, according to an aspect of the present disclosure, common resource block (CRB)-to-interlace index mapping and interlace index-to-subchannel index mapping may be determined based on the sidelink resource pool configuration information of the unlicensed band.

Also, according to an aspect of the present disclosure, the number of channels of a resource and an RBS used to perform physical sidelink shared channel (PSSCH) transmission in a sidelink resource pool may be indicated based on the SCI.

According to an aspect of the present disclosure, the number of subchannels of the resource may be determined as one of a plurality of values based on at least one of subcarrier spacing (SCS), the number of interlaces within the sidelink resource pool, and subchannel-to-interlace allocation relationship.

EFFECT

According to the present disclosure, it is possible to provide a method of performing sidelink (SL) communication in a wireless communication system.

According to the present disclosure, it is possible to provide a method of configuring an SL resource pool in an unlicensed band.

According to the present disclosure, it is possible to provide a method and apparatus for configuring an SL resource pool in an unlicensed band based on a resource block set (RBS) and an interlace/subchannel.

According to the present disclosure, it is possible to provide a method and apparatus for allocating an SL interlace index based on a common resource block (CRB).

According to the present disclosure, it is possible to provide a method and apparatus for mapping an SL interlace index and a subchannel index.

According to the present disclosure, it is possible to provide a method of indicating an SL resource pool configured in an unlicensed band.

According to the present disclosure, it relates to a method and apparatus for configuring an SL resource pool in an unlicensed band in consideration of a region-specific regulation.

Effects achievable from the present disclosure are not limited to the aforementioned effects and still other effects not described herein may be clearly understood by one of ordinary skill in the art to which the present disclosure pertains from the following description.

BRIEF DESCRIPTION OF DRAWINGS

FIG. 1 illustrates an example of describing a new radio (NR) frame structure to which the present disclosure may apply.
FIG. 2 illustrates an NR resource structure to which the present disclosure may apply.
FIG. 3 illustrates an NR sidelink slot structure to which the present disclosure may apply.
FIG. 4 illustrates an NR sidelink frequency to which the present disclosure may apply.
FIG. 5 illustrates an NR sidelink resource pool configuration to which the present disclosure may apply.
FIG. 6 illustrates an unlicensed band for each region for NR sidelink communication to which the present disclosure may apply.
FIG. 7 illustrates use of a 5 gigahertz (GHz) unlicensed band to which the present disclosure may apply.
FIG. 8 illustrates a method of increasing a bandwidth in consideration of a power spectral density (PSD) limitation to which the present disclosure may apply.
FIG. 9 illustrates a method of configuring a guard band in consideration of a shared band within an intra-cell to which the present disclosure may apply.
FIG. 10 illustrates an interlace-based resource block (RB) resource assignment method to which the present disclosure may apply.
FIG. 11 illustrates a method of performing a listen before talk (LBT) procedure in an unlicensed band to which the present disclosure may apply.
FIG. 12 illustrates a channel occupancy time (COT) sharing and discovery burst transmission to which the present disclosure may apply.
FIG. 13 illustrates a method of applying cyclic prefix (CP) extension to uplink when performing COT sharing between downlink and uplink to which the present disclosure may apply.

FIG. 14 illustrates a semi-static channel access procedure to which the present disclosure may apply.

FIG. 15 illustrates a method of performing channel occupancy to which the present disclosure may apply.

FIG. 16 illustrates a method of configuring a bandwidth part (BWP) in a sidelink unlicensed band and a resource block set (RBS) in a resource pool to which the present disclosure may apply.

FIG. 17 illustrates a method of configuring a sidelink unlicensed band resource pool to which the present disclosure may apply.

FIG. 18 illustrates a frequency resource-based sidelink unlicensed band resource pool configuration using interlace assignment to which the present disclosure may apply.

FIG. 19 illustrates a sidelink unlicensed band resource pool configuration method to which the present disclosure may apply.

FIG. 20 illustrates a case in which a subchannel index is mapped to consecutive sidelink interlace indexes based on uniform CRB-to-interlace index relationship to which the present disclosure may apply.

FIG. 21 illustrates a case in which a CRB-to-interlace index is non-uniformly allocated and a subchannel index is mapped to each of consecutive interlace indexes to which the present disclosure may apply.

FIG. 22 illustrates a method of assigning a subchannel index based on an interlace index within a lowest interlace block in a frequency within a resource pool to which the present disclosure may apply.

FIG. 23 illustrates a method of applying a block interleaver to which the present disclosure may apply.

FIG. 24 illustrates a method of configuring a non-uniform CRB-to-interlace index based on a block interleaver and random function combination to which the present disclosure may apply.

FIG. 25 illustrates a method of mapping each of subchannel indexes constituting a single resource pool to nonconsecutive sidelink indexes to which the present disclosure may apply.

FIG. 26 illustrates an interlace structure to which the present disclosure may apply.

FIG. 27 illustrates an interlace structure to which the present disclosure may apply.

FIG. 28 illustrates a sidelink frequency resource assignment method to which the present disclosure may apply.

FIG. 29 illustrates a uniform interlace structure-based frequency resource assignment method to which the present disclosure may apply.

FIG. 30 illustrates a non-uniform interlace structure-based frequency resource assignment method to which the present disclosure may apply.

FIG. 31 is a flowchart illustrating a method of assigning sidelink unlicensed band frequency resources to which the present disclosure may apply.

FIG. 32 is a diagram illustrating a base station device and a terminal device to which the present disclosure may apply.

BEST MODE

Various examples of the present disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

In describing the examples of the present disclosure, a detailed description on known configurations or functions may be omitted for clarity and conciseness. Throughout the drawings and the detailed description, unless otherwise described, the same drawing reference numerals are understood to refer to the same elements, features, and structures.

It will be understood that when an element is referred to as being "connected to," "coupled to," or "accessed to" another element, it can be directly connected, coupled, or accessed to the other element or the intervening elements may be present. Also, it will be further understood that when an element is described to "comprise/include" or "have" another element, it specifies the presence of another element, but does not preclude the presence of another element uncles otherwise described.

Further, the terms, such as first, second, and the like, may be used herein to describe the elements in the description herein. These terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent the elements as necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the present disclosure.

Herein, the elements described in various examples may not be necessarily essential and may be partially selectable. Therefore, an example including a partial set of elements described in an example is also included in the scope of the present disclosure. Also, an example that additionally includes another element to the elements described in various examples is also included in the scope of the present disclosure.

The description described herein is related to a wireless communication network, and an operation performed in a wireless communication network may be performed in the process of controlling a network and transmitting data by a system that controls a wireless network, e.g., a base station, or may be performed in a user equipment

It is apparent that various operations performed for communication with a UE in a network including a base station and a plurality of network nodes may be performed by the base station or by other network nodes in addition to the base station. Here, the term 'base station (BS)' may be interchangeably used with other terms, for example, a fixed station, a Node B, an eNodeB (eNB), a gNodeB (gNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes the meaning of transmitting or receiving information or a signal through the corresponding channel. For example, transmitting a control channel indicates transmitting control information or a signal through the control channel. Likewise, transmitting a data channel indicates transmitting data information or a signal through the data channel.

In the following description, although the term "new radio (NR) system" is used to distinguish a system according to various examples of the present disclosure from the existing system, the scope of the present disclosure is not limited thereto.

A new radio (NR) system supports various subcarrier spacings (SCSs) by considering various scenarios, service requirements, potential system compatibility, and the like. Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Here, the 5G mobile communication technology may be defined by including the existing Long Term Evolution-Advanced (LTE-A) system as well as the aforementioned NR system. That is, the 5G mobile communication technology may operate by considering the backward compatibility with a previous system as well as a newly defined NR system. Therefore, following the 5G mobile communication may include technology operating based on the NR system and a technology operating based on a previous system (e.g., LTE-A, LTE), but is not limited to a specific system.

First of all, the physical resource structure of the NR system to which the present disclosure is applied will be briefly described.

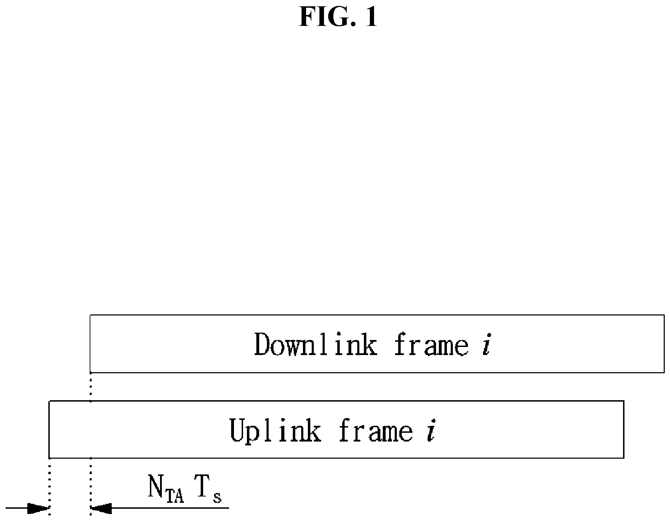

FIG. 1 illustrates an example of an NR frame structure according to an example of the present disclosure.

In the NR, a basic unit of a time domain may be $T_c = 1/(\Delta f_{max} \cdot N_f)$. Here, $\Delta f_{max} = 480 \cdot 10^3$ and $N_f = 4096$. Also, $\kappa = T_s/T_c = 64$ may be a constant in a multiple relationship between an NR time unit and an LTE time unit. In LTE, $T_s = 1/(\Delta f_{ref} \cdot N_{f,ref})$, $\Delta f_{ref} = 15 \cdot 10^3$ and $N_{f,ref} = 2048$ may be defined as a reference time unit. The constants for the multiple relationship between the NR time base unit and the LTE time base unit may be defined as $k=T_s/T_c=64$.

Referring to FIG. 1, a time structure of a frame for a downlink/uplink (DL/UL) transmission may include $T_f = (\Delta f_{max}N_f/100) \cdot T_s = 10ms$. Here, a single frame may include 10 subframes corresponding to $T_{sf} = (\Delta f_{max}N_f/1000) \cdot T_s = 1ms$. A number of consecutive orthogonal frequency division multiplexing (OFDM) symbols per subframe may be

$$N_{symb}^{subframe,\mu} = N_{symb}^{slot} N_{slot}^{subframe,\mu}$$

. Also, each frame may be divided into two half frames and the half frames may include 0 to 4 subframes and 5 to 9 subframes. Here, the half frame 1 may include 0 to 4 subframes and the half frame 2 may include 5 to 9 subframes.

The $N_{TA}$ represents the timing advance (TA) between downlink (DL) and uplink (UL). Here, a transmission timing of the uplink transmission frame i is determined based on a downlink reception timing at a UE according to the following Equation 1.

[Equation 1]

$$T_{TA} = \left(N_{TA} + N_{TA,offset}\right)T_c$$

The $N_{TA,offset}$ denotes a TA offset value occurring due to a duplex mode difference and the like. Basically, in a frequency division duplex (FDD), $N_{TA,offset}=0$. In a time division duplex (TDD), $N_{TA,offset}$ may be defined as a fixed value by considering a margin for a DL-UL switching time. For example, in the TDD (Time Division Duplex) of RF1 (Frequency Range 1) which is a sub-6 GHz or less frequency, $N_{TA,offset}$ may be $39936T_C$ or $2600T_C$. $39936T_C=20.327\mu s$ and

$25600T_C=13.030\mu s$. Also, in FR2 (Frequency Range 2) which is millimeter wave (mmWave), the $N_{TA,offset}$ may be $13792T_C$. At this time, $39936T_C=7.020\ \mu s$.

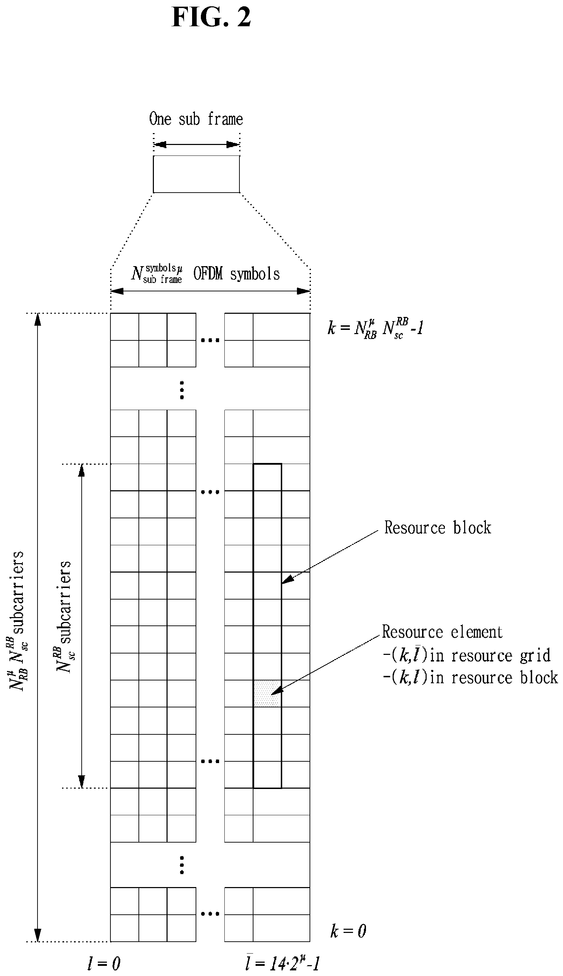

FIG.2 illustrates an NR resource structure to which the present disclosure may apply.

A resource element within a resource grid may be indexed based on each subcarrier spacing. Here, a single resource grid may be generated for each antenna port and for each subcarrier spacing. The uplink/downlink transmission and reception may be performed based on a corresponding resource grid.

A resource block (RB) on a frequency domain is configured of 12 REs and for every 12 Res, an index for one RB ($n_{PRB}$) may be configured. The index for RB may be utilized within a specific frequency band or system bandwidth. The index for RB may be defined as shown in Equation 2 below. Here, the $N^{RB}_{sc}$ represents the number of subcarriers per one RB and k represents the subcarrier index.

[Equation 2]

$$n_{PRB} = \left\lfloor \frac{k}{N^{RB}_{sc}} \right\rfloor$$

Numerologies may be variously configured to meet the various services and requirements of the NR system. For example, one subcarrier spacing (SCS) may be supported in the LTE/LTE-A system, but a plurality of SCS may also be supported in the NR system.

A new numerology for the NR system that supports the plurality of SCSs may operate in a frequency range or carrier, such as 3 GHz or less, 3 GHz-6 GHz, 6 GHZ-52.6 GHz, or 52.6 GHz or more, to solve the issue that a wide bandwidth is unavailable in a frequency range or carrier such as 700 MHz or 2 GHz

Table 1 below shows an example of the numerologies supported by the NR system.

[Table 1]

| $\mu$ | $\Delta f = 2^{\mu} \cdot 15[kHz]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Referring to the above Table 1, the numerologies may be defined based on an SCS, a cyclic prefix (CP) length, and a number of OFDM symbols per slot, which are used in an OFDM system. The aforementioned values may be provided to a UE through the higher layer parameters, DL-BWP-mu and DL-BWP-cp, for the downlink, and through the higher layer parameter, UL-BWP-mu and UL-BWP-cp, for the uplink.

In the above Table 1, if $\mu$ = 2 and SCS = 60 kHz, a normal CP and an extended CP may be applied. In other bands, only the normal CP may be applied.

Here, a normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for the length of another time section. Here, for the coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having the number of symbols less by at least one symbol than that of the normal slot. For example, in the case of providing a low latency such as an Ultra-Reliable and Low Latency Communications (URLLC) service, the latency may decrease through the non-slot having the number of slots less than that of the normal slot. Here, the number of the OFDM symbols included in the non-slot may be determined based on a frequency range. For example, a non-slot with 1 OFDM symbol length may be considered in the frequency range of 6 GHz or more. As another example, the number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7, as a non-slot standard, it is provided as an example only.

Also, for example, an SCS corresponding to $\mu$ = 1 and 2 may be used in the unlicensed band of 6 GHz or less and an SCS corresponding to $\mu$ = 3 and 4 may be used in the unlicensed band above 6 GHz. Here, for example, if $\mu$ = 4, it may be used for a synchronization signal block (SSB).

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows a number of OFDM symbols per slot ( $N_{symb}^{slot}$ ), a number of slots per frame ( $N_{slot}^{frame,\mu}$ ), and a number of slots per subframe ( $N_{slot}^{subframe,\mu}$ ) for the normal CP by the subcarrier spacing setting. In Table 2, the values are based on the normal slot having 14 OFDM symbols.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Table 3, in the case of the extended CP applied (that is, $\mu$ = 2 and SCS = 60 kHz), shows the number of slots per frame and the number of slots per subframe based on the normal slot for which the number of OFDM symbols per slot is 12.

As described above, a single subframe may correspond to 1 ms on a time axis. Also, a single slot may correspond to 14 symbols on the time axis. For example, a single slot may correspond to 7 symbols on the time axis. Therefore, the number of slots and the number of symbols that may be considered may be differently set within 10 ms corresponding to a single radio frame. Table 4 may show the number of slots and the number of symbols according to each SCS. Although the SCS of 480 kHz may not be considered in Table 4, the present disclosure is not limited to such examples.

[Table 4]

| SCS | slots in 10ms | slots in 10ms | symbols in 10 ms |
|---|---|---|---|
| 15 kHz | 10 | 20 | 140 |
| 30 kHz | 20 | 40 | 280 |
| 60 kHz | 40 | 80 | 560 |
| 120 kHz | 80 | N/A | 1120 |
| 240 kHz | 160 | N/A | 2240 |
| 480 kHz | 320 | N/A | 4480 |

The V2X service may support a set of basic requirements for V2X services. The requirements are designed basically in sufficient consideration of a road safety service. Here, V2X UE may exchange autonomous status information through a SL. Also, the V2X UE may exchange the information with infrastructure nodes and/or pedestrians.

The V2X service (e.g., LTE Rel-15) may support at least one of a carrier aggregation in a SL, a high order modulation, a latency reduction, a transmit (Tx) diversity, and a sTTI (Transmission Time Interval). For this purpose, new features may be applied to the V2X communication. More particularly, the V2X UE may operate in consideration of coexistence with other V2X UEs. For example, the V2X UE may use the same resource pool as other V2X UEs.

For example, the technical features may be classified largely based on four categories as represented by the following Table 5 by considering the use cases for supporting a V2X service as the system aspect (SA) 1, but are not limited thereto. In Table 5, the "Vehicles Platooning" may be the technology that enables a plurality of vehicles to dynamically form a group and similarly operate. The "Extended Sensors" may be the technology that enables an exchange of data gathered from sensors or video images. The "Advanced Driving" may be the technology that enables a vehicle to drive based on semi-automation or full-automation. The "Remote Driving" may be the technology for remotely controlling a vehicle and the technology for providing an application. Based thereon, further description related thereto may be given by the following Table 5.

[Table 5]

| Vehicles Platooning |
| --- |
| Vehicles Platooning enables the vehicles to dynamically form a platoon travelling together. All the vehicles in the platoon obtain information from the leading vehicle to manage this platoon. These information allow the vehicles to drive closer than normal in a coordinated manner, going to the same direction and travelling together. |
| **Extended Sensor** |
| Extended Sensor enables the exchange of raw or processed data gathered through local sensors or live video images among vehicles, road site units, devices of pedestrian and V2X application servers. The vehicles can increase the perception of their environment beyond of what their own sensors can detect and have a more broad and holistic view of the local situation. High data rate is one of the key characteristics. |
| **Advanced Driving** |
| Advanced Driving enables semi-automated or full-automated driving. Each vehicle and/or RSU shares its own perception data obtained from its local sensors with vehicles in proximity and that allows vehicles to synchronize and coordinate their trajectories or manoeuvres. Each vehicle shares its driving intention with vehicles in proximity too. |
| **Remote Driving** |
| Remote Driving enables a remote driver or a V2X application to operate a remote vehicle for those passengers who cannot drive by themselves or remote vehicles located in dangerous environments. For a case where variation is limited and routes are predictable, such as public transportation, driving based on cloud computing can be used. High reliability and low latency are the main requirements. |

Also, the SA1 may support the case of operating in various systems (e.g., LTE and NR) as enhanced V2X (eV2X) support technology for supporting the V2X service. For example, an NR V2X system may be a first V2X system. Also, an LTE V2X system may be a second V2X system. That is, the NR V2X system and the LTE V2X system may be different V2X systems.

The following describes a method for satisfying low latency and high reliability required in an NR SL based on the NR V2X system. However, the same or similar composition may be expanded and applied to the LTE V2X system, and is included but not limited to the following examples. That is, in the LTE V2X system, the present disclosure may apply to an interactable portion.

Here, NR V2X capability may not be limited to essentially supporting only V2X services and V2X RAT to be used may be selected.

Also, new service requirements for Public Safety and commercial use case for NR V2X services may be considered further in. For example, the use case may include, but is not limited to, at least one of more advanced V2X services, public safety services, the Network Controlled Interactive Service (NCIS), the Gap Analysis for Railways (MONASTERYEND), the Enhanced Relays for Energy Efficiency and Extensive Coverage (REFEC), and the Audio-Visual Service Production (AVPROD) certification.

A physical channel, a signal, a basic slot structure, and a physical resource may be configured for the NR V2X. Here, an NR Physical SL Shared Channel (NR PSSCH) may be a physical layer NR SL data channel. The V2X UEs may exchange data and control information (e.g., 2nd SCI, CSI) through the NR PSSCH. An NR Physical SL Control Channel (NR PSCCH) may be a physical layer NR SL control channel. The NR PSCCH refers to a channel for transmitting scheduling information of the NR SL data channel and control information (1st SL Control Information (SCI)) including 2nd SCI indication. That is, a V2X UE may transmit control information for SL data communication to another V2X UE through PSCCH. An NR Physical SL Feedback Channel (NR PSFCH) refers to a channel for transmitting physical layer NR Hybrid Automatic Repeat Request (HARQ) feedback information and a channel for transmitting HARQ-ACK feedback information corresponding to the NR SL data channel (i.e., PSSCH). The V2X UE may transmit data to another V2X UE and then may receive the HARQ feedback information of the corresponding data through NR PSFCH. An NR SL Synchronization Signal/Physical SL Broadcast Channel (SLSS/PSBCH) block refers to a channel block in which an NR SL synchronization signal and a broadcast channel are transmitted in a single consecutive time. Here, the SLSS/PSBCH block may be periodically transmitted based on a set of one or more block indexes to support beam-based transmission in an NR frequency band. The synchronization signal includes a Primary SL Synchronization Signal (PSSS) and a Secondary SL Synchronization Signal (SSSS). The synchronization signal is generated based on at least one SLSSID value. The NR Physical SL Broadcast Channel (PSBCH) refers to a channel for transmitting system information required to perform V2X SL communication. The NR PSBCH is transmitted with the SLSS and periodically transmitted based on a set of SLSS/PSBCH block indexes to support beam-based transmission.

Also, a PSCCH and PSSCH may be defined for supporting NR V2X. A UE may transmit SCI to another UE via PSCCH. Here, the Tx UE may transmit the first SCI (1st SCI, SCI format 1-A) to the Rx UE via PSCCH. The 1st SCI may be used for scheduling the PSSCH and the secondary SCI (2nd SCI) within the PSSCH, and the 1st SCI may contain priority information, time/frequency resource allocation information, resource reservation information, Demodulation Reference Signal (DMRS) pattern information, 2nd SCI format indicator information, 2nd beta-offset indicator information as a parameter for the SCI and PSSCH rate matching operation, DMRS port count information, Modulation Coding Scheme (MCS) information, additional MCS table indicator information (e.g., indicating one of the 64 QAM, or 256 OAM or URLLC MCS table), PSFCH overhead indicator information (a parameter for PSSCH rate matching operation with 2nd SCI), and at least one of the reserved bits.

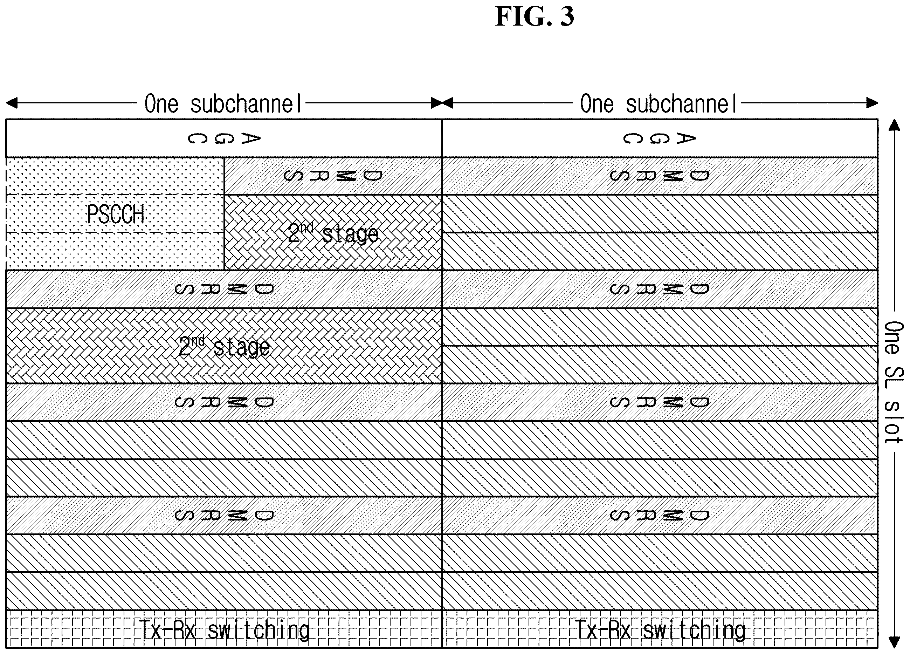

FIG. 3 illustrates an NR SL slot structure to which the present disclosure may apply.

Referring to FIG. 3, a single SL slot (SL slot) includes a single automatic gain control (AGC) symbol. Also, a single SL slot includes a single Tx-Rx switching symbol. In a single SL slot, the PSSCH that is a channel through which data is transmitted is transmitted through at least one subchannel (e.g., two subchannels in FIG. 3). Also, in a time domain, PSCCH (1st SCI), 2nd SCI, PSSCH (Data), and demodulation RS (DMRS) for demodulation may be transmitted to the remaining OFDM symbols excluding the AGC symbol and the Tx-Rx switching symbol. In detail, locations of the PSCCH (1st SCI), the 2nd SCI, PSSCH (Data), and the DMRS for demodulation may be the same as in FIG. 3, but are not limited thereto. For example, in FIG. 3, the PSCCH and the 2nd SCI are present in the first subchannel and the PSSCH and the DMRS may be allocated considering this. As another example, the second subchannel refers to a subchannel in which the PSCCH and the 2nd SCI are absent and the PSSCH and the DMRS may be allocated as in FIG. 3.

Here, the number of PSSCH DMRSs may be configured according to a higher layer configuration and one or more PSSCH DMRSs may be configured according to a channel environment of the UE. A PSCCH (1st SCI) receives a demodulation using a DMRS of PSCCH (i.e., PSCCH DMRS) and is equally allocated and transmitted to every four resource elements (REs) within a single resource block (RB). On the contrary, the 2nd SCI is decoded using the PSSCH DMRS.

Also, for example, a single resource pool associated with an NR SL may support the frequency division multiplexing (FDM), the time division multiplexing (TDM), and the spatial divisional multiplexing (SDM). This means that each resource in a single resource pool can be divided and used based on the frequency, the time, and the space, which can increase the resource efficiency.

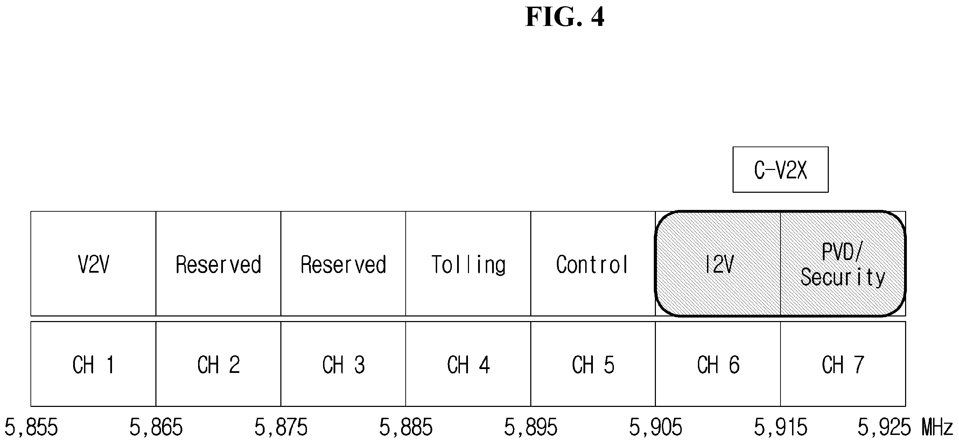

FIG. 4 illustrates an NR SL frequency to which the present disclosure may apply. For example, the NR SL may operate based on at least one of Frequency Range 1 (FR1) (sub 6 GHz) and Frequency Range 2 (FR2) (i.e., up to 52.6 GHz), the unlicensed ITS bands, and the licensed band. In detail, for example, referring to FIG. 4, 5,855 to 5,925 MHz may be allocated for an ITS service (technology neutral manner).

Also, the NR V2X quality of service (QoS) requirements may be considered. That is, the delay, the reliability, and a data rate may need to be satisfied with predetermined conditions related to the requirements for an NR V2X service. Here, the requirements may be configured as in Table 6 below and Table 7 may show the PC5 QoS for NR V2X.

Here, to satisfy the QoS requirements, the access stratum (AS) level QoS management may be required. To this end, a HARQ and CSI feedback associated with a link adaptation may be required. Also, each of the NR V2X UEs may have a different maximum bandwidth capability (max. BW capability). Considering this, AS level information that includes at least one of UE capability, QoS related information, a radio bearer configuration, and a physical layer configuration may be exchanged between the NR V2X UEs.

[Table 6]

| |
|---|
| - Delay:[3, 100ms]<br>- Reliability :[90%, 99.999%]<br>- Data rate: up to 1Gbps (TS22.186) |

[Table 7]

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 1 | GBR (NOTE 1) | 3 | 20 ms | $10^{-4}$ | N/A | 2000 ms | Platooning between UEs-Higher degree of automation; Platooning between UE and RSU-Higher degree of automation |
| 2 | | 4 | 50 ms | $10^{-2}$ | N/A | 2000 ms | Sensor sharing-higher degree of automation |
| 3 | | 3 | 100 ms | $10^{-4}$ | N/A | 2000 ms | Information sharing for automated driving-between UEs or UE and RSU-higher degree of automation |
| 55 | Non-GBR | 3 | 10 ms | $10^{-4}$ | N/A | N/A | Cooperative lane change-higher degree of automation |
| 56 | | 6 | 20 ms | $10^{-1}$ | N/A | N/A | Platooning informative exchange-low degree of automation; Platooning-information sharing with RSU |
| 57 | | 5 | 25 ms | $10^{-1}$ | N/A | N/A | Cooperative lane change-lower degree of automation |
| 58 | | 4 | 100 ms | $10^{-2}$ | N/A | N/A | Sensor information sharing-lower degree to an RSU |
| 59 | | 6 | 500 ms | $10^{-1}$ | N/A | N/A | Platooning-reporting to an RSU |
| 82 | Delay Critical GBR (NOTE 1) | 3 | 10 ms | $10^{-4}$ | 2000 bytes | 2000 ms | Cooperative collision avoidance; Sensor sharing-Higher degree of automation; Video sharing-higher degree of automation |
| 83 | | 2 | 3 ms | $10^{-5}$ | 2000 bytes | 2000 ms | Emergency trajectory alignment; Sensor sharing-Higher degree of automation |
| •NOTE 1: GBR and Delay Critical GBR PQIs can only be used for unicast PC5 communications. Editor's note: It is FFS if GBR and Delay Critical GBR can also be used for broadcast and groupcast. | | | | | | | |
| • NOTE 1: For standardized PQI to QoS characteristics mapping, the table will be extended/updated to support service requirements for other identified V2X services. • NOTE 2: The PQIs may be used for other services than V2X. | | | | | | | |

Hereinafter, a SL HARQ procedure is described. Whether the V2X UE is to report a HARQ feedback is indicated by a higher layer (e.g., RRC) configuration and SCI signaling (e.g., 2nd SCI). For example, if the V2X UE performs SL communication based on a groupcast, whether to report the HARQ feedback may be determined based on a distance between a Tx UE and a Rx UE.

When the V2X UE performs at least one of unicast and groupcast transmission, the SL HARQ feedback may be enabled or disabled. Here, enabling/disabling the HARQ feedback may be determined based on at least one of a channel condition (e.g., RSRP), a distance between Tx UE and Rx UE, and QoS requirements.

In the case of groupcast, whether to transmit a HARQ feedback may be determined based on a physical distance between the Tx UE and the Rx UE. Here, when the HARQ feedback is performed for the groupcast transmission via a PSSCH, the Rx UE may send a negative response only when the received PSSCH decoding fails. It may be called an option 1 operation. Moreover, when the HARQ feedback is performed for the groupcast transmission via a PSSCH, the Rx UE may send a positive response or a negative response based on whether a PSSCH decoding succeeds and it may be called an option 2 operation. In the option 1 operation of feeding back only a negative response as a NACK only HARQ feedback, if the physical distance between the Tx UE and the Rx UE is less than or equal to the communication range requirements, a HARQ feedback corresponding to the PSSCH reception may be performed. On the contrary, if the physical distance between the Tx UE and the Rx UE is greater than the communication range requirements, the V2X UE may not perform the HARQ feedback corresponding to the PSSCH reception.

Here, a location of the Tx UE is indicated to the Rx UE through SCI signaling associated with the PSSCH. The Rx UE may estimate a distance from the Tx UE based on both pieces of information included in the received SCI and its location information and may operate as above.

Also, when a unicast communication is performed based on the V2X, a case in which an SL HARQ feedback is enabled may be considered. The Rx UE may generate and transmit a HARQ ACK/NACK corresponding to the PSSCH depending on whether the decoding of a corresponding transport block (TB) succeeds.

Then, an NR SL resource allocation mode refers to a mode in which a base station schedules a SL transmission resource. Here, a mode in which the base station schedules a SL transmission resource may be mode 1. For example, when the V2X UE is located within the base station coverage, the V2X UE may receive SL resource information from the base station. On the contrary, there is a mode in which the V2X UE directly determines a resource for SL transmission on either a SL resource configured by the base station/network or a pre-configured SL resource. Here, a mode in which the UE directly determines a SL transmission resource may be mode 2.

Also, numerology and waveform for sidelink may be considered, which may be as shown in Table 8 below. In detail, regarding PSSCH/PSCCH and PSFCH in a sidelink, SCS and CP lengths supported in each of FR1 and FR2 may be as shown in Table 8 below. Here, the waveform may support only OFDM without supporting DFT-S-OFDM, but may not be limited thereto. A sidelink-synchronization signal block (SL-SSB) may be defined independently for each frequency range, which may be similar to NR-Uu.

[Table 8]

| | FR 1 | FR2 |
|---|---|---|
| PSSCH/PSCCH and PSFCH | - Normal CP for 15 kHz, 30 kHz, 60 kHz<br>- Extended CP for 60 kHz | Normal CP for 60 kHz, 120 kHz,<br>- Extended CP for 60 kHz |
| note | No support of DFT-S-OFDM for NR SL in Rel-16 | |

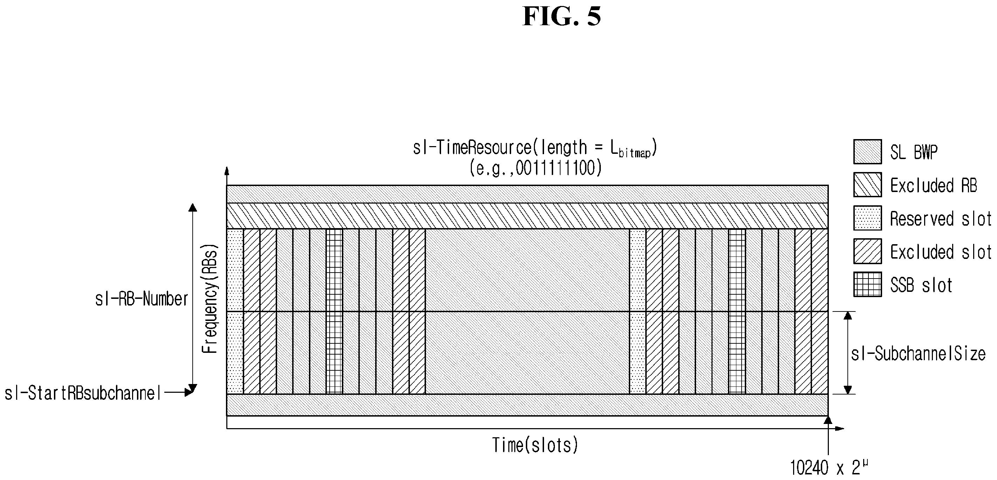

FIG. 5 illustrates an NR sidelink (SL) resource pool configuration. Referring to FIG. 5, a resource pool may represent resources in a time and a frequency used for sidelink transmission and reception. For example, at least one resource pool may be configured within a single SL BWP within a single carrier. Here, resources of the resource pool may be configured based on time resources of a slot set unit and frequency resources of a consecutive subchannel set unit. Also, the resource pool may be configured for each of transmission and reception.

In more detail, as time resources for resource pool configuration provided in an NR sidelink, at least one of a resource pool time period, a sidelink slot set (sl-TimeResource (length = $L_{bitmap}$)) within a single resource pool application period, and a first symbol and the number of consecutive symbols for a set of consecutive symbols within a single slot may be configured. As frequency resources, at least one of a bandwidth of at least one subchannel (e.g., sl-SubchannelSize = {10, 15, 20, 25, 50, 75 and 100} RBs), the entire bandwidth of the resource pool indicated by the number of consecutive subchannels (set of consecutive subchannels (e.g., sl-NumSubchannel = {1 to 27})), and a location in the frequency domain of a first subchannel of the resource pool (sl-StartRBsubchannel={0 to 265}) may be configured. For example, resources in the time domain and the frequency domain may be configured based on higher layer parameters. In FIG. 5, a frequency resource corresponding to an excluded resource block (RB) may represent some remaining RBs if total available RB resources do not exactly match a subchannel size (i.e., if it does not reach the number of RBs constituting a single subchannel). Here, the corresponding resources may not be used in the NR sidelink. Also, for example, a reserved slot may indicate a remaining slot in a situation in which a multiple unit of a length of a bitmap (e.g., sl-TimeResource) on a time resources is not established and may not be used as NR sidelink resources.

Next, a case in which an unlicensed band (unlicensed spectrum) is used for communication between a base station and a UE may be considered. For example, a communication scheme based on the unlicensed band may be a scheme of occupying a channel through competition and performing communication based on the occupied channel. The unlicensed band-based communication may be performed even for communication between the base station and the UE. In the following, described is an operation based on a case in which the unlicensed band is used for the sidelink communication. That is, the unlicensed band may be used even for sidelink communication that is communication between UEs. Also, the sidelink resource pool needs to be configured in consideration of using the sidelink unlicensed band. In more detail, the sidelink communication may be performed based on the resource pool. In the case of performing communication through the unlicensed band, the resource pool configuration needs to be differently configured.

For example, the resource pool of the sidelink communication may be configured based on a slot unit and a symbol that may be used for sidelink within a slot may be determined, which is the same as shown in FIG. 5. Also, as described above with FIG. 5, in the frequency domain, it may be configured based on the number of consecutive subchannels. The aforementioned sidelink resource pool configuration may be configured in consideration of unlicensed band communication, which is described below.

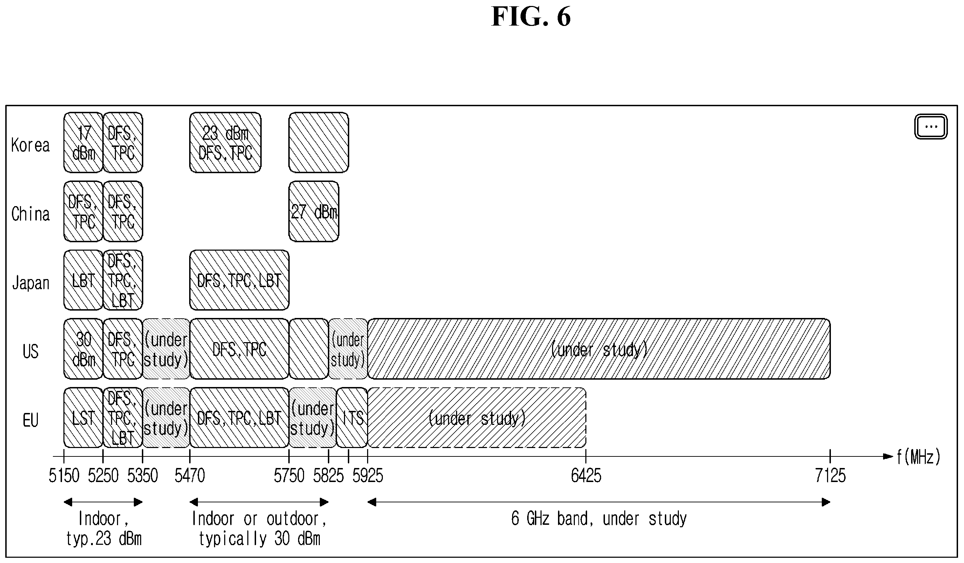

FIG. 6 illustrates an unlicensed band for each region for NR sidelink communication to which the present disclosure may apply. In Table 8 above, the frequency range of NR FR1 may be from 450 MHz to 6 GHz, but the corresponding frequency range may change from 450 MHz to 7.125 GHz. The frequency range of NR FR1 may be changed for the unlicensed band of 6 GHz band, but may not be limited thereto.

For example, the unlicensed band may be located below 1 GHz, 2.4 GHz, 5 GHz, 6 GHz, 37 GHz (USA only), and 60 GHz, but may not be limited thereto. Here, referring to FIG. 6, for example, in the system, 5 GHz band may be band 46 that is defined as 5150 to 5925 MHz. Also, for example, for LAA operation, band 49 (3550-3700 MHz) may be defined as a citizens broadband radio service (CBRS), but may not be limited thereto.

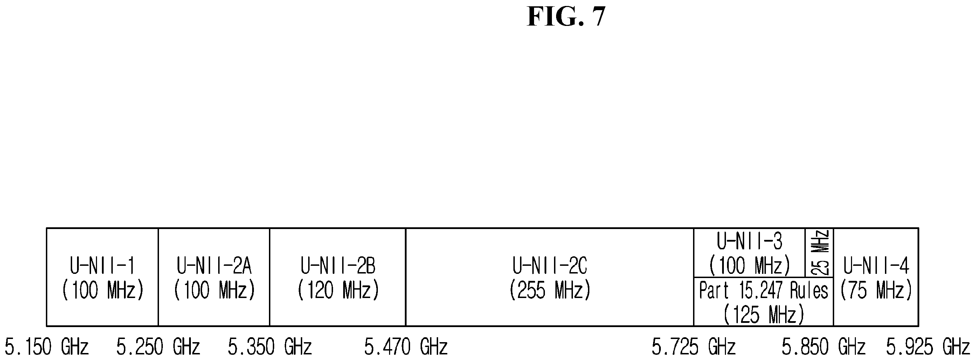

FIG. 7 illustrates use of a 5 GHz unlicensed band to which the present disclosure may apply. Referring to FIG. 7, each band within the 5 GHz unlicensed band may be set and, based thereon, use of the unlicensed band may be set. For example, it may be divided into 20 MHz units and each 20 MHz may be a single channel.

Here, the low frequency band of 5150 to 5350 MHz within the aforementioned band is specified in most regions to have the maximum transmit power of 23 dBm for indoor use. Also, in the band of 5470 MHz or more, it is used in a region with transmit power of up to 30 dBm and outdoor use in most areas. Here, for example, additional requirements may be present in some regions, given as effective isotropic radiated power (EIRP) values based on Table 9 below, along with limitation of the maximum transmit power.

[Table 9]

| Power spectral density, maximum channel occupancy time, minimum occupied bandwidth and dynamic frequency selection, transmit power control and LBT |
| --- |

Here, power spectral density (PSD) may indicate that the device is limited to performing full power transmission within a reference bandwidth. As a detailed example, European regulations may limit the PSD to 10 dBm/MHz. Therefore, in non-20MHz bandwidths, the device may not perform transmission at the maximum transmit power of 23 dBm.

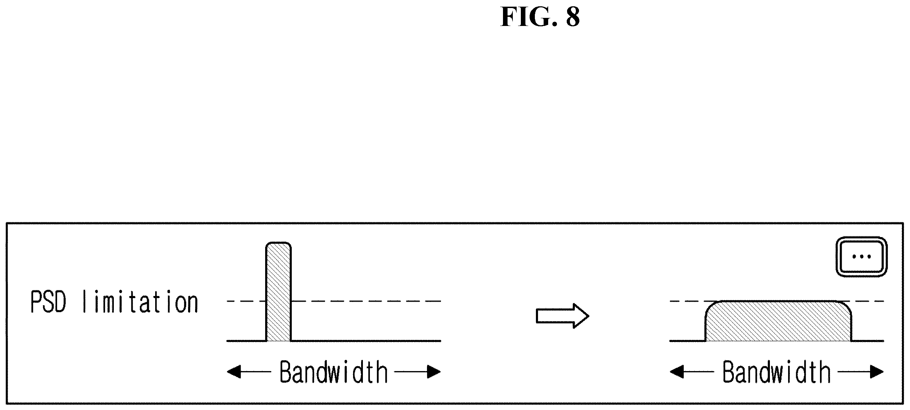

FIG. 8 illustrates a method of increasing a bandwidth in consideration of a PSD limitation to which the present disclosure may apply. For example, as in FIG. 8 a case of small data transmission that requires only a small bandwidth may be considered. Here, in the case of performing small data transmission through a wide bandwidth, coverage may be expanded. Also, minimum bandwidth occupancy regulation may be satisfied with transmission through the wide bandwidth. Considering this, a method of performing transmission in the wide bandwidth may be preferred for small data.

Also, for example, in the case of occupying a channel through a channel access procedure in the unlicensed band, a maximum channel occupancy time (COT) corresponding to an occupancy-allowable maximum time may be differently set for each region. For example, Japan allows the maximum COT of up to 4 ms, while Europe allows the maximum COT of up to 8 ms or 10 ms. However, it is only an example and is not limited to the aforementioned embodiment. Also, for example, Europe may support frame base equipment (FBE) and load base equipment (LBE) rules. Here, FBE may be set to High Performance Radio (LAN HiperLAN)/2, and LBE may be adopted and applied from Wi-Fi standard specification and both may be supported in NR as a new communication system.

Also, for example, the minimum occupied bandwidth may be a bandwidth regulation that needs to be minimally occupied when a channel access is successful once. For example, the minimum occupied bandwidth regulation may be configured to occupy a nominal channel BW of 80 to 90% or more. As a detailed example, when the UE transmits a PUSCH to the base station in an unlicensed band, resources for the PUSCH may be requested to be allocated in an interlaced form in a specific bandwidth, but may not be limited to the corresponding embodiment.

Also, a regulation for dynamic frequency selection may be a regulation that limits bandwidth use for the purpose of protecting a system (e.g., radio) having high priority for use of the unlicensed band. Also, a transmit power control regulation may be a regulation that limits transmit power much lower than an allowed maximum transmit power value to be used. Also, a listen before talk (LBT) regulation may be a regulation for a channel access procedure, and Europe may support FBE and LBE rules. Here, FBE may be Hiperlan/2, and LBE may be adopted and applied from Wi-Fi standard specification and both may be supported in NR.

Also, for example, the 5 GHz unlicensed band may be used based on the aforementioned description, but, use of the 6 GHz band is under discussion in every country and institution. Here, the 6 GHz band may be a band that is not used in a mobile system, which differs from the 5 GHz. That is, different from the 5 GHz band shared in a plurality of mobile communication systems, the 6 GHz band may be used for a single specified communication system. Therefore, problems or inefficiency arising due to coexistence of different systems may be reduced.

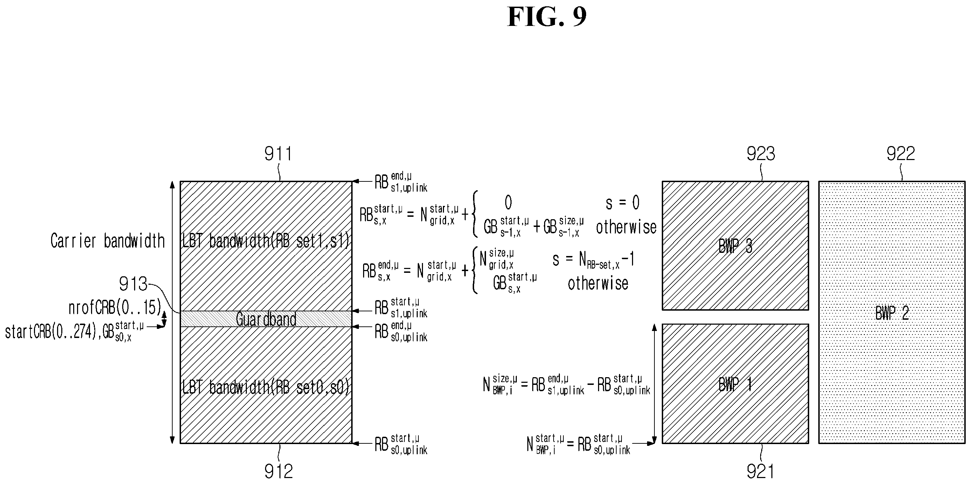

FIG. 9 illustrates a method of configuring a guard band in consideration of a shared band (e.g., unlicensed band) within an intra-cell to which the present disclosure may apply.

Referring to FIG. 9, to support a wideband operation in a shared spectrum access, a UE may receive IntraCellGuardBandsPerSCS parameter for each of an UL carrier and a DL carrier from a base station based on base station configuration. The UE may be provided with intra-cell guard bands of $N_{RB-set,x}$ - 1 in a single carrier (subcarrier spacing index=$\mu$). Referring to FIG. 9, the UE may receive higher layer signaling for a start common resource block (CRB) and the number of CRBs for each guard band. For example, the CRB may be a resource block defined/configured based on a point A that is a start location of a transmission bandwidth in a carrier in the frequency domain. The UE may verify information on the point A through base station signaling and, based thereon, may recognize a CRB location in frequency.

Here, each guard band may be defined based on $GB_{s,x}^{\text{start},\mu}$ parameter as the start CRB and, in each guard band, the size of the number of CRBs may be defined based on $GB_{s,x}^{\text{size},\mu}$ parameter. The UE may receive the aforementioned information through higher layer signaling based on each of startCRB and nrofCRBs parameters. Here, $s \in \{0,1, ..., N_{RB-set,x} - 2\}$, $N_{RB-set,x}$ denotes the number of RB sets, and x may be configured as DL or UL for downlink and uplink. $N_{RB-set,x}$ RB sets may be configured as a resource block set (RBS) within a single carrier through a guard band configuration. For example, the guard band may be configured based on IntraCellGuardBandsPerSCS parameter and the RBS may be configured within a single carrier accordingly.

Here, each RBS frequency bandwidth may correspond to an LBT frequency bandwidth. That is, each RBS may be set as a bandwidth corresponding to an LBT procedure performed through the base station and the UE. For example, in FIG. 9, if LBT succeeds in a correspondence area corresponding to the LBT bandwidth, an RB set 1 911 and an RB set 2 922 may occupy a corresponding band and may perform communication. That is, the RBS may correspond to the LBT bandwidth. For example, a Tx node (e.g., gNB or UE) may determine channel occupancy for the unlicensed band through an LBT channel access procedure performed on RBS resources corresponding to the LTE bandwidth. When the LBT procedure succeeds in a single RBS, the Tx node may perform transmission on a resource corresponding to the RBS.

Here, each RBS may be defined as a start CRB and an end CRB. The start CRB may be $RB_{s,x}^{\text{start},\mu}$, and the end CRB may be $RB_{s,x}^{\text{end},\mu}$. Here, a size of guard band 913 may be nrofCRBs. For example, a size of a guard band 913, nrofCRBs, may not be expected to be set to a size smaller than the number of applicable intra-cell guard bands defined in consideration of requirements regarding an interference status of a wireless bandwidth according to subcarrier spacing $\mu$ and carrier size $N_{\text{grid},x}^{\text{size},\mu}$.

Here, the start CRB and the end CRB for each RBS (911, 912) may be determined based on RBS index s, and RBS index s may be s $\in \{0,1, ..., N_{RB-set,x} - 1\}$. That is, RBS index s may be a resource block with a size of $RB_{s,x}^{\text{size},\mu}$, and $RB_{s,x}^{\text{size},\mu}$ denotes the number of CRBs determined through the start CRB and the end CRB based on Equation 3 below. Also, in each RBS, the start CRB and the end CRB may be as shown in Equation 4 and Equation 5 below.

[Equation 3]

$$RB_{s,x}^{\text{size},\mu} = RB_{s,x}^{\text{end},\mu} - RB_{s,x}^{\text{start},\mu} + 1$$

[Equation 4]

$$RB_{s,x}^{\text{start},\mu} = N_{\text{grid},x}^{\text{start},\mu} + \begin{cases} 0 & s = 0 \\ GB_{s-1,x}^{\text{start},\mu} + GB_{s-1,x}^{\text{size},\mu} & \text{otherwise} \end{cases}$$

[Equation 5]

$$RB_{s,x}^{\text{end},\mu} = N_{\text{grid},x}^{\text{start},\mu} + \begin{cases} N_{\text{grid},x}^{\text{size},\mu} - 1 & s = N_{\text{RB-set},x} - 1 \\ GB_{s,x}^{\text{start},\mu} - 1 & \text{otherwise} \end{cases}$$

For example, if the UE is not provided with IntraCellGuardBandsPerSCS parameter configuration, CRB indexes for a nominal intra-cell guard band and an RBS pattern based on carrier $\mu$ and carrier size $N_{\text{grid},x}^{\text{size},\mu}$ may be determined according to requirements of RF standard. Also, for example, if the aforementioned nominal intra-cell guard band and RBS pattern do not include an intra-cell guard band, an RBS of the corresponding carrier may be assumed to be 1.

For example, in FIG. 9, two LBT BWs (RBS 0, RBS1) may be configured in a single BWP 922 within a single carrier bandwidth. Here, a single guard band 913 may be configured between the two RBSs 911 and 913. A location of each of the two RBSs 911 and 913 may be determined as shown in FIG. 9, based on the aforementioned higher layer parameter. Also, for example, when a plurality of BWPs 921 and 923 are configured within a single carrier bandwidth, an RBS associated with each BWP may be verified. Here, RBSs corresponding to a first RBS (=s0, 912) and a last RBS(=s1, 911) of each BWP among the RBSs 911 and 912 within the carrier may be indexed through s0 and s1 indexes.

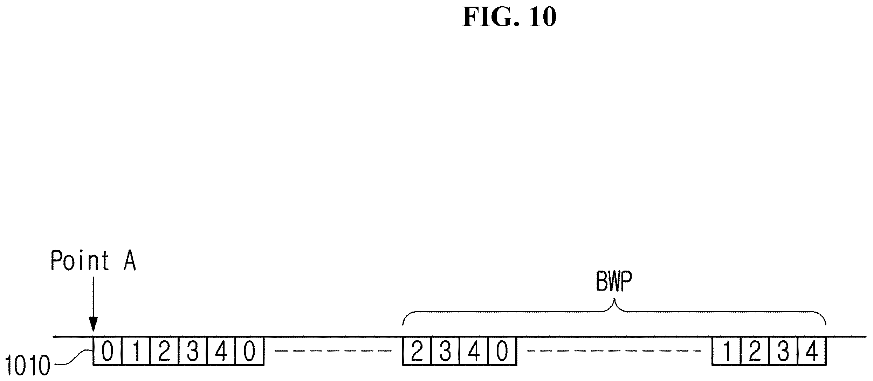

FIG. 10 illustrates an interlace-based RB resource assignment method applied to the present disclosure. PUCCH/PUSCH transmission may be performed through RB resources allocated based on interlaces. Here, a reference point for RB resource allocated based on interlace may be point A 1010. The UE may acquire information on the point A 1010 through base station signaling, which is described above. Also, a common resource block (CRB) may be a resource block defined/configured based on the point A 1010 that is a start location point of a transmission bandwidth on a carrier. That is, when physical uplink control channel (PUCCH)/physical uplink shared channel (PUSCH) transmission is performed with interlace-based RB resources, all the interlaces may be used based on the same configuration on the carrier based on the reference point A 1010 and the CRB. For example, as described above, the existing wireless communication system (e.g., LTE LAA) and wireless communication system (e.g., NR) may perform PUCCH/PUSCH transmission with the interlace-based RB resources, but may not be limited thereto.

For example, in the case of 15 kHz SCS, an interlace of M=10 may be defined for the entire bandwidth. In the case of 30 kHz SCS, an interlace of M=5 may be defined for the entire bandwidth. Also, X bits may be provided for interlace assignment through frequency resource assignment-related signaling. As a detailed example, if X = 5 for 30 kHz SCS, X bits may indicate all possible interlace combinations. As still another example, if X = 6 for 15 kHz SCS, X bits may indicate a start interlace index and the number of consecutive interlaces. For example, a value of 55 may be required based on the combination of the start interlace index and the number of consecutive interlaces. Therefore, when indicated with 6 bits, 9 remaining RIV values may be present and the 9 remaining RIV values may indicate specific pre-defined interlace combination.

Also, Y bits may be provided for RB set assignment through frequency resource assignment-related signaling. RB set assignment may be start and end RB sets based on an RIV format. Here, RB sets may be consecutive at all times. Also, for example, when two adjacent RB sets are allocated, a guard band between the RB sets may also be allocated and may be used as a frequency resource.

Also, for example, a method may be required to fairly access and use a channel between various wireless access technologies/systems (e.g., Wi-Fi, LAA, NR-U, etc.) in an unlicensed band. For example, a rule (e.g., ETSI rule) for channel access based on the aforementioned 5 GHz and 6 GHz frequency bands may be provided, and matters as shown

Table 10 below may be specified, but may not be limited thereto.

[Table 10]

| |
|---|
| - nominal center frequencies |
| - nominal channel bandwidth and occupied channel bandwidth |
| - RF output power limits |
| - transmit power control (TPC) and power density requirements |
| - transmitter unwanted emissions limits |
| - receiver spurious emissions requirements |
| - dynamic frequency selection (DFS) |
| - adaptivity (channel access -mechanism) |
| - receiver blocking requirements |
| - user access restrictions |

(continued)

| - geo-location capability |
|---|

Here, as a channel access method based on Table 10, Frame Base Equipment (FBE) and Load Base Equipment (LBE) rules may be supported. For example, the LBE access rule may consider factors of Table 11 below. The channel access may be performed by determining a channel occupancy status based on clear channel assessment (CCA) measurement. Also, transmission based on an occupied channel may be performed after determining transmit power based on channel occupancy.

[Table 11]

Medium energy sensing: performs energy measurement in a transmission candidate channel during an observation slot (9 $\mu$s) time based on clear channel assessment (CCA) measurement.

Energy detection (ED) threshold (TL): Threshold for determining whether a channel is occupied. If energy greater than TL is detected, the UE determines that the channel is occupied, and otherwise, determines that the channel is empty (idle). The ED threshold is specified based on the maximum transmit power as shown below, assuming 0 dBi receive antenna.

· For PH $\leq$ 13 dBm: TL = -75 dBm/MHz (i.e., -62 dBm / 20 MHz)

· For 13 dBm < PH < 23 dBm: TL = -85 dBm/MHz + (23 dBm - PH)

· For PH $\geq$ 23 dBm: TL = -85 dBm/MHz (i.e., -72 dBm/20 MHz)

A channel access priority class (CAPC) may be set for channel access, which may be as shown in Table 12. Here, a priority class may specify priority based on a specific traffic type and quality of service (QoS) requirements. For example, in Table 12, four priority classes may be defined. Here, a different priority counter (p) value may be specified for each priority class. Here, the higher priority class, the lower the priority counter value may be.

Also, for example, a channel occupancy time (COT) may be a transmission burst duration. Here, the maximum COT limit may be differently determined for each different priority class. A higher priority class may have a shorter maximum COT duration. That is, a higher priority class may have a lower priority counter value and a shorter maximum COT duration.

Also, for example, a contention window (CW) may be a window for selecting a counter value for performing a backoff procedure for channel access. Here, the contention window may be different for each priority class, which may be as shown in Table 12 below.

[Table 12]

| Channel Access Priority Class ($p$) | $m_p$ | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

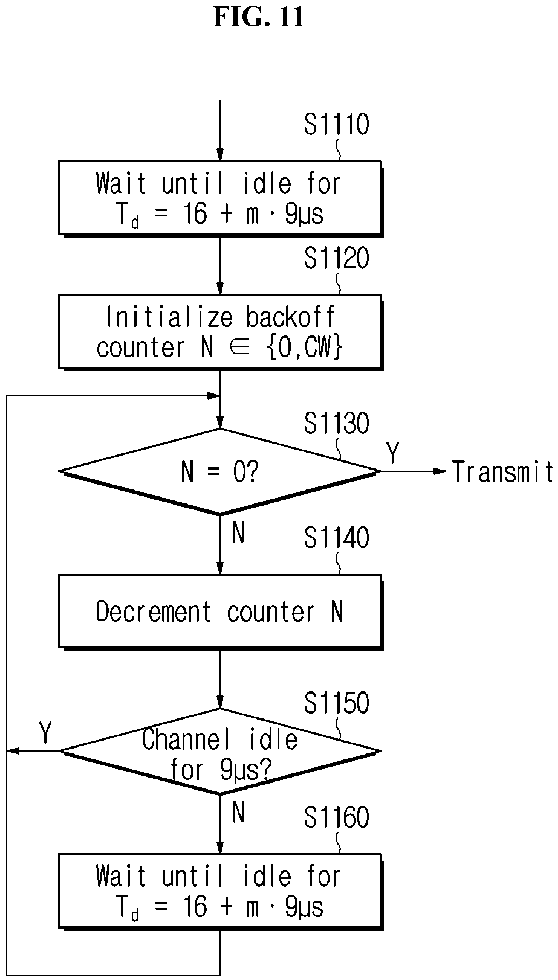

FIG. 11 illustrates a method of performing a listen before talk (LBT) procedure in an unlicensed band to which the present disclosure may apply. For example, a Type 1 LBT procedure (LBT Cat. 4) may be considered based on the aforementioned LBE. The LBT procedure may be set based on category 1 to category 4, which is described below. Referring to FIG. 11, a Tx node may wait to verify whether a channel is available for a defer period (S1110). Here, the defer period may be determined based on a priority class of Table 13 below. For example, the defer period may measure whether a channel is available for at least 25 $\mu$s. Here, that feedback information on data transmission is transmitted within a maximum of 16 $\mu$s may be considered. Considering the above, the defer period may measure whether the channel is available for at least 25 $\mu$s.

When it is determined that the channel is available for the defer period, the corresponding node may perform a backoff procedure. Here, backoff counter N may be initialized to a random value between 0 and a CW value (S1120). That is, the random value between 0 and the CW value may be used as the backoff counter. Here, whether the channel is available may be counted based on 9 $\mu$s slot and backoff may be performed as much as the backoff counter value. Here, a larger backoff value may be set based on a larger contention window and a collision probability may decrease accordingly.

Then, whether the backoff counter value is 0 may be determined (S1130). If the backoff counter value is 0, the corresponding node may perform transmission. The corresponding node may use the channel up to the maximum COT during which occupancy is allowed, based on a priority class for transmission. On the contrary, if the backoff counter value is not 0, the backoff counter value may decrement, that is, decrease (S1140). Then, whether the channel is idle in a next 9 μs slot may be determined (S1150). Here, if the channel is in an idle state in the 9 μs slot, whether the backoff counter value is 0 may be verified again. If the backoff counter value is not 0, an operation of decreasing the backoff counter value may be repeated. Through this, if the backoff counter value becomes 0, the aforementioned transmission may be performed.

On the contrary, if the channel is not idle in the 9 μs slot, the corresponding node may wait again for an amount of time corresponding to the defer period and then verify whether the channel is available based on the backoff counter value (S1160). Based on the above, the corresponding node may occupy an unlicensed band and may perform transmission. Also, for example, the defer period for downlink/uplink, possible contention values, and maximum COT based on the priority class may be as shown in Table 13 below.

[Table 13]

| Priority Class | | Defer Period $T_d = 16 + m * 9$μs | Possible CW Values $\{CW_{min}, ....., CW_{max}\}$ | Max $COT^{a,b}$(ms) |
|---|---|---|---|---|
| 1 | DL | 25 | {3, 7} | 2 |
| | UL | 34 | | 2 |
| 2 | DL | 25 | {7, 15} | 3 |
| | UL | 34 | | 4 |
| 3 | DL | 43 | {15, 31, 63} | 8 or 10 |
| | UL | | {15, 31, 63, 127, 255, 511, 1023} | 8 or 10 |
| 4 | DL | 79 | {15, 31, 63, 127, 255, 511, 1023} | 8 or 10 |
| | UL | | | 8 or 10 |

Here, for example, a contention window size may be adjusted based on HARQ feedback. In detail, if HARQ feedback received for a first transmission that the corresponding node performs within the COT is NACK, the contention window size may be doubled in consideration of retransmission. On the contrary, if HARQ feedback received for each transmission is ACK, the contention window size may be reset to a CW min value. Here, adjusting the contention window size with the first transmission within the COT may result in a collision in the first transmission after the node occupies the channel. In the aforementioned case, the contention window size needs to be updated. On the other hand, receiving NACK for transmission after the first transmission within the COT may be more likely to occur based on a poor channel environment or other reasons rather than collision occurrence. Accordingly, as described above, the contention window size may be adjusted based on feedback of the first transmission within the COT.

As still another example, contention window adjustment for configured grant-based downlink (DL)/uplink (UL) transmission may be performed based on feedback information in downlink/ feedback information in uplink, respectively. Also, for example, when downlink feedback transmission is absent in uplink grant-based uplink transmission, contention window adjustment may be performed through a new data indicator (NDI), but is not limited to a specific embodiment.

Also, for example, an energy detection (ED) threshold (TL) may be determined based on a parameter, a channel bandwidth, and other values. As still another example, the ED threshold may be determined depending on whether a carrier frequency is shared with other wireless access technologies (e.g., WiFi) or whether an installation method ensures the use of only a specific wireless communication system (e.g., NR). As a detailed example, in the 5 GHz band coexisting with other systems, a maximum threshold may be set to -72 dBm for 20 MHz carrier. Here, -72dBm may be a value that is determined through comparison to other wireless communication systems (e.g., WiFi system), but may not be limited to a specific embodiment. As still another example, if only a specific wireless communication system (e.g., NR) uses a carrier frequency, the maximum threshold may be used as -62dBm for 20MHz carrier and a threshold for uplink transmission may be set through RRC signaling, but may not be limited to a specific embodiment.

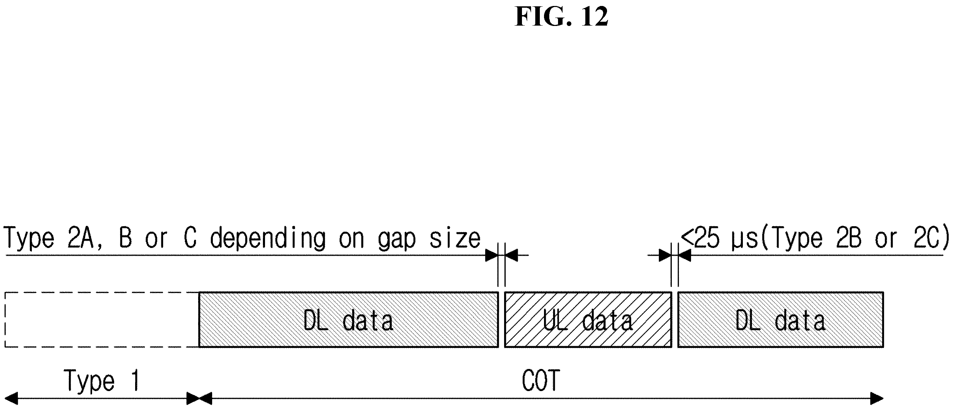

Then, FIG. 12 illustrates a COT sharing and discovery burst transmission applied to the present disclosure. Referring to FIG. 12, in the case of occupying a channel the aforementioned Type 1 LBT procedure, transmission may be performed within the COT. Here, Type 2 transmission may have three options based on a gap section within the COT, which may be as shown in Table 14 below. For example, Type 2A (LBT cat 2) transmission may set a COT gap to 25 μs or more and may use the same for discovery burst transmission. For example, Type 2A may be considered for SSB transmission, but may not be limited thereto. As still another example, Type 2B transmission may be a type that applies a COT gap of 16 μs. Also, Type 2C transmission may be a type that applies a COT gap of 16 μs or less. For example, if next transmission is 16 μs at most, idle sensing may not be required and Type 2C may be applied.

[Table 14]

| |
|---|
| - Type 2A (LBT cat 2) - applies COT gap of 25 μs or more/uses the same for discovery burst transmission<br>- Type 2B - applies COT gap of 16 μs<br>- Type 2C (LBT cat 1) -applies COT gap of 16 μs or less |

Here, for the aforementioned COT sharing, the gap may be smaller than an OFDM symbol interval. This is because an OFDM symbol-based resource assignment method may be insufficient and a method of indicating CP extension may be applied by taking the aforementioned issues into consideration. That is, extending a CP faster than an OFDM symbol boundary may be indicated and one of Table 15 below may be indicated.

[Table 15]

| |
|---|
| - No CP extension<br>- $C_2 T_{symb}$ - $T_{TA}$ - 16 μs => use with Type 2B<br>- $C_3 T_{symb}$ - $T_{TA}$ - 25 μs, => use with Type 2A<br>- Tsymb - 25 μs - option that does not compensate for TA |

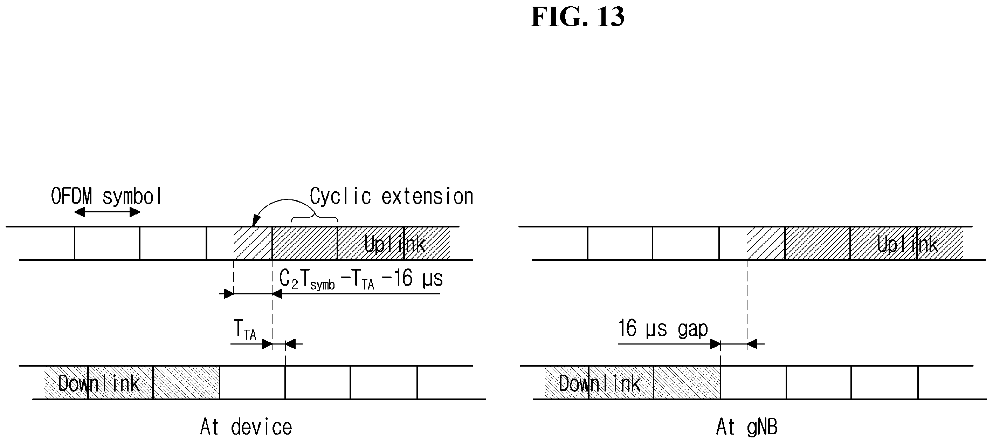

For example, FIG. 13 illustrates a method of applying CP extension to uplink when performing COT sharing between downlink and uplink, applicable to the present disclosure. FIG. 13 illustrates a case in which C2 is set to 1 with 16 μs gap based on COT sharing, but is not limited thereto. Referring to FIG. 13, a TA value may be considered to ensure the 16 μs gap between downlink and uplink in a base station. For example, C values may be set through RRC signaling. Also, CP extension for uplink transmission may be indicated in uplink grant.

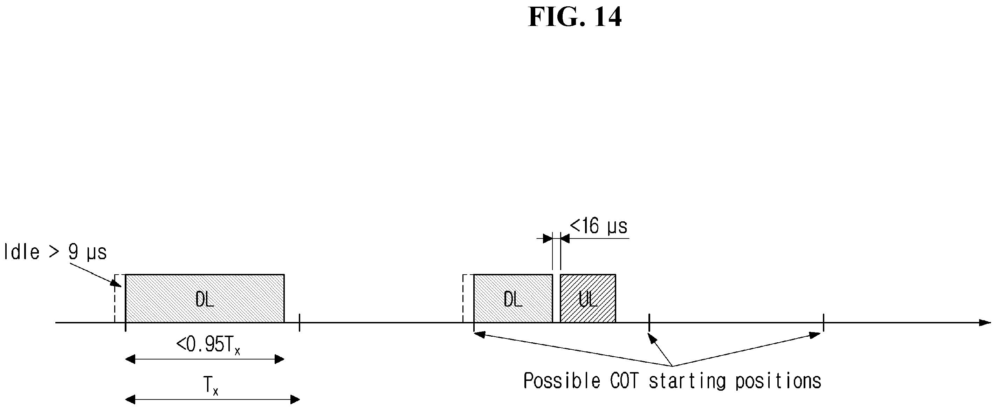

As still another example, a case of performing channel access based on a FBE method may be considered. The FBE method may be a channel occupancy method applicable to a region (e.g., specific building, factory) in which absence of other systems is ensured through a rule. Here, in the case of performing channel access based on the FBE method, transmission may start at a specific point in time. As a detailed example, FIG. 14 illustrates a semi-static channel access procedure applicable to the present disclosure. Referring to FIG. 14, a single COT may start every Tx ms. Here, when the channel is idle for at least 9 μs before the COT, the channel may be occupied. Here, Tx ms may be set to one of 1 ms to 10 ms values. Also, the gap may be at least 5% of Tx. Here, COT sharing may be used in a similar manner as the LBE and the gap may be 16 μs at most.

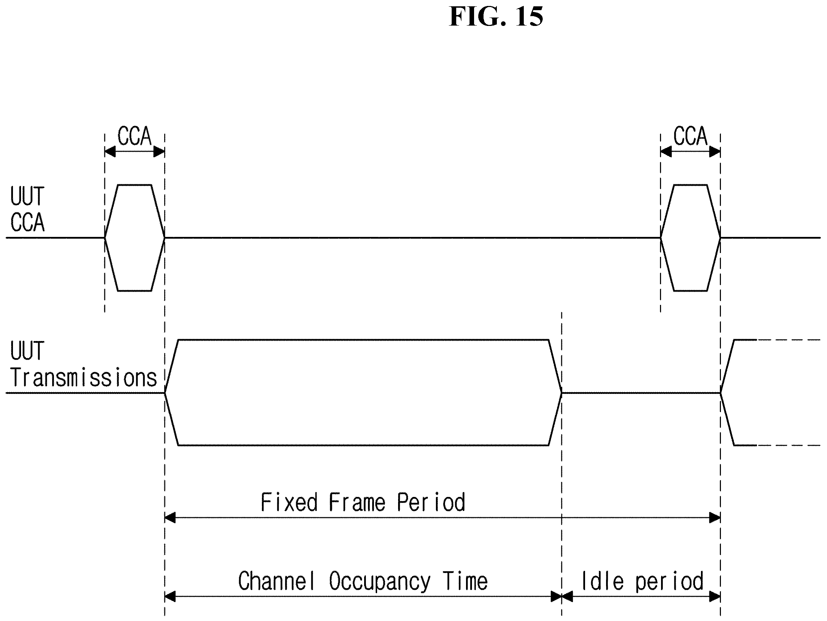

For example, FIG. 15 illustrates a method of performing channel occupancy applicable to the present disclosure. Referring to FIG. 15, a device may perform CCA check in a CCA observation period not smaller than 20 μs based on energy detection, before performing transmission in an operating channel. Also, for example, in the case of transmitting a control frame (e.g., ACK, block ACK) in consideration of multicast, a CCA procedure may be skipped and transmission may be performed immediately after receiving a packet. That is, the UE may perform control frame transmission without a new CCA procedure, but this may not exceed the maximum COT.

For example, when the device transmits an ACK/NACK signal after receiving data, the device may skip the CCA, but this needs to be within the maximum COT. Also, for example, transmission of a signal with a maximum duty cycle within 5% of 50 ms as an observation period through short control signaling may be performed without CCA, but may not be limited to a specific form.

Also, for example, an LBT category may be considered. The LBT category may consider category 1 that performs transmission immediately after a short switching gap, category 2 that performs LBT without random backoff, category 3 in which a contention window of a fixed size and random backoff are performed, and category 4 in which a contention window of a variable size and random backoff are performed.

In detail, category 1 may be a method of performing transmission immediately after a short switching gap. Here, category 1 may be used to perform transmission immediately after a switching gap within one COT. The switching gap from receive to transmit within one COT may include a switching time of a transceiver, and may not be longer than 16 μs. Also, for example, category 2 may be an operation of performing LBT without random backoff. For example, in the case of performing LBT, category 2 may be a method of performing initial CCA and, if the channel is idle, occupying the channel and transmitting data in an unlicensed channel. Here, random backoff count may not be performed. On the other hand, category 3 may be an LBT method in which random backoff is performed with the contention window of the fixed size. As a case in which LBT is performed based on category 3, if the channel is idle by performing initial CCA, random backoff may be performed with the fixed contention window (e.g., fixed "q" value in which q denotes a value that determines a contention window size of selecting a random N counter between 0 and q). For example, a random backoff operation allows a counter value randomly selected within the contention window to occupy the channel when the value is 0 by decreasing the count depending on whether the channel is idle for each enhanced Clear Channel Assessment (ECCA) slot.

As still another example, category 4 may be an LBT method in which random backoff is performed with the contention window of the variable size. Category 4 may differ from category 3 in that category 4 has a variable contention window. On the other hand, an operation of occupying the channel by applying an N value based on a random backoff value may be the same. That is, category 4 may be the same as category 3 except that the contention window size may differ based on a time or an event compared to category 3, and may be used in a plurality of wireless communication systems (e.g., LAA, NR-U, WiFi), but is not limited to a specific embodiment. Here, for example, different channel access categories (e.g., LBT category) may be defined and used for transmission of other channels/signals within one COT. Also, for example, in a new wireless communication system (e.g., NR-U), category 4 LBT and category 2 may be used within the COT, which may be as shown in Table 16 below. Also, category 2 LBT may be used for discovery burst transmission in a case in which there is no unicast transmission and a feature of the transmission is a limited transmission with transmission in a time of 1 ms or less and of which duty cycle is 5% or less, but may not be limited to a specific form.

[Table 16]

| Channel access LBT mechanisms defined for NR-U along with their designation: |
| --- |
| - Cat 4 LBT with a contention window (Type 1) |
| - Cat 2 LBT with 25 $\mu$s gap (Type 2A) |
| - Cat 2 LBT with 16 $\mu$s gap (Type 2B) |
| - Cat 1 LBT with no more than 16 $\mu$s gap without channel sensing (Type 2C) |
| ☐ A transmission burst length limit of 0.584 ms is applied when using this. |

In the following, a method of assigning frequency resources such that sidelink communication of a wireless communication system (e.g., NR) may be operable in an unlicensed frequency band is described. For example, currently, a size of an RB set included in 20 MHz in the unlicensed band (e.g., NR-U) of the wireless communication system may be different based on an SCS. For example, for 15 kHz SCS, the size of the RB set may be 100 to 110 PRBs. Also, for 30 kHz SCS, the size of the RB set may be 50 to 55 PRBs. Here, for example, in the case of assigning interlace-based RB resources, some interlaces may include 11 PRBs, but remaining interlaces may include only 10 PRBs.

Here, for example, a case of varying a size of a subchannel to use the entire bandwidth in sidelink may be considered. That is, a case of differently setting the number of PRBs included in each subchannel may be considered. However, in a case in which different subchannel sizes are set, it may be difficult to guarantee transmission if retransmission is performed after initial transmission of a TB with the same transport block size (TBS). Considering the above, the subchannel size (i.e., number of PRBs) in each subchannel may be set to be the same, but may not be limited thereto. However, if the subchannel size is set to be the same in each subchannel, some may not be used in a single interlace based on interlace-based RB resource configuration.

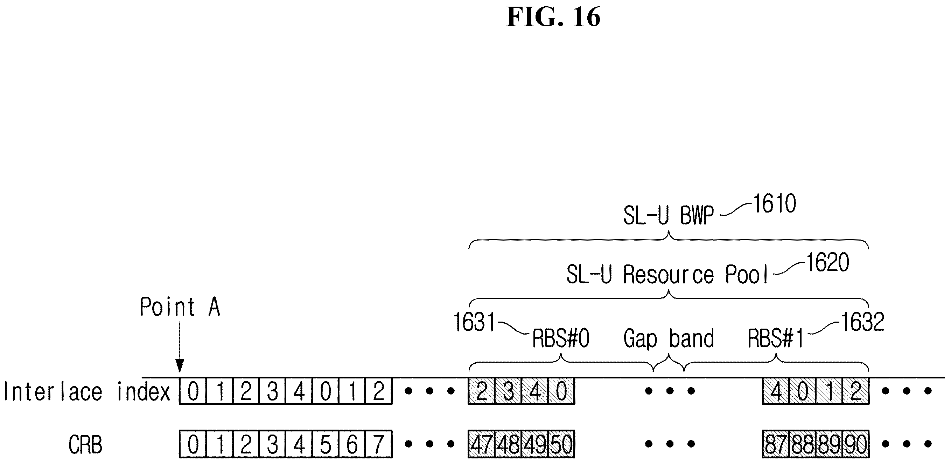

Here, for example, FIG. 16 illustrates a method of setting an RBS in a BWP and resource pool in a sidelink unlicensed band to which the present disclosure may apply. A frequency domain resource structure of a wireless communication system (e.g., NR SL-U) of the sidelink unlicensed band may consider a bandwidth part (BWP), a resource pool (RP), an interlaced RB, and an RBS (RB set). Here, the RBS may be considered even in the wireless communication system (e.g., NR U) of the unlicensed band, and it is not limited to a specific embodiment.

Referring to FIG. 16, a single sidelink unlicensed band (SL-U) BWP 1610 may be configured in a sidelink UE, a single SL-U RP 1620 may be configured in the SL-U BWP 1610, and two RBSs 1631 and 1632 may be configured in the SL-U RP 1620. However, it is only an example for clarity of description and is not limited to the aforementioned embodiment. Here, for example, in an SL-U system, an interlace structure may be considered to meet OCB and PSD requirements required in the unlicensed band. That is, in the SL-U system, the sidelink interlace structure may be performed by performing CRB indexing based on point A that is a reference frequency point of a single carrier. In FIG. 16, a frequency domain corresponding to CBR index 47 to CRB index 90 may be configured as the SL-U BWP 1610 based on configuration of the SL-U BWP 1610 and frequency resources including two RBSs RBS 1631 and 1632 may be configured based on configuration of the SL-U RP 1620, but it is only an example and may not be limited thereto. In the following, a frequency domain resource configuration method for the SL-U system as shown in FIG.16 and a resource assignment method for actual SL-U data transmission based thereon are described.

For example, in a channel access procedure of a sidelink unlicensed band wireless communication system (e.g., NR SL-U), the aforementioned type 1 channel access procedure and type 2 channel access procedure may be applied. Also, for example, UE-to-UE COT sharing may be applied to UEs that operate in the sidelink unlicensed band. That is, a single Tx UE may share a portion of unlicensed resources acquired through the LBT procedure with an Rx UE or another UE.

For example, as in the existing sidelink wireless communication system (NR SL), frequency resources may be configured based on a subchannel in the wireless communication system (e.g., NR SL-U) of the sidelink unlicensed band.

That is, the term "subchannel" may be used even in NR SL-U as in NR SL. However, the name of the subchannel may be differently configured in the wireless communication system (e.g., NR SL-U) of the sidelink unlicensed band and is not limited to a specific embodiment. The following description is made based on the subchannel for clarity of description.

For example, a single interlace-based RB structure to meet the aforementioned unlicensed band requirements may be defined as M RBs in the frequency domain. Here, the interlace-based RB structure may be defined as RBs with an interval corresponding to the uniform number of RBs. As still another example, the interlace-based RB structure may be configured using RBs with an interval corresponding the ununiform number of RBs and is not limited to a specific embodiment.

Here, the interlace-based RB structure may be preconfigured commonly for NR SL UEs in a cell-specific or carrier-specific manner according to configuration based on a bandwidth/numerology. As still another example, the interlace-based RB structure may be configured specifically in a physical link between UEs by higher layer configuration, and is not limited to a specific embodiment. Here, the interlace-based RB structure may be applied to all interlaces regardless of the carrier bandwidth. Therefore, the interlace-based RB structure may be configured according to a CRB that is defined based on point A that is a specific reference point in the frequency domain. Here, a single subchannel may be defined to be preconfigured with k interlaces. As still another example, a single subchannel may be configured with k interlaces through higher layer signaling. k may be the number of interlaces per subchannel. The number of interlaces per subchannel may have a fraction (or decimal value) or an integer value, which is described below. Also, for example, when a plurality of RBSs are configured within a single SL BWP, frequency resource assignment indication may include RBS assignment information and subchannel or interlace-based RB frequency resource assignment information.

As still another example, resource assignment may be performed based on an interlace-based RB unit rather than a "subchannel" unit in the sidelink unlicensed band system (e.g., NR SL-U). Here, the frequency resource assignment unit may be an interlace-based RB unit rather than the existing subchannel, but this is only an example and is not limited to a specific embodiment.

In the following, both the subchannel unit and interlace-based RB unit may be considered as resource allocation units in the frequency domain. Here, the subchannel may be configured with k interlaces or may be configured with the number of consecutive RBs. However, in the following, for clarity of description, the "subchannel unit" based on the interlace structure is described as the unit of frequency resource assignment. However, it is also possible to configure frequency resource assignment with the interlace-based RB unit rather than the subchannel unit by applying the proposed method, and is not limited to a specific form.

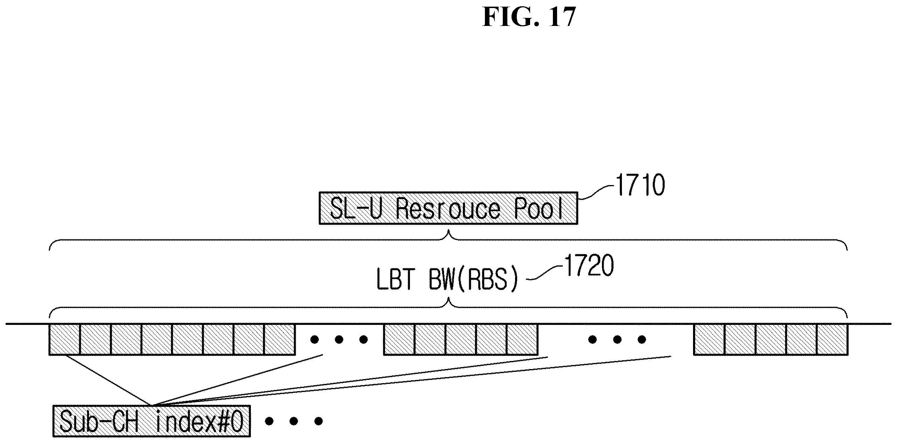

Here, for example, FIG. 17 illustrates a method of configuring a sidelink unlicensed band resource pool based on consecutive frequency resources to which the present disclosure may apply. Referring to FIG. 17, a sidelink unlicensed band resource pool 1710 may be configured based on consecutive frequency resources. Here, the sidelink unlicensed band resource pool 1710 may be indicated with only an RBS index. In more detail, referring to FIG. 17, a case in which only a single RBS 1720 is configured in the sidelink unlicensed band resource pool 1710 in consideration of the LBT procedure of the unlicensed band may be considered. Here, resource pool configuration of the sidelink unlicensed band may be indicated to the UE based on consecutive frequency resources from perspective of the frequency domain (hereinafter, Case 1). For example, to meet requirements such as the aforementioned OCB and PSD in the unlicensed band, most frequency resources (e.g., >80%) within at least one LBT BW (RBS 1720) may be configured as a single resource pool. Considering the aforementioned regulation, there may be a limit in at least one resource pool configuration for a single RBS within a single SL BWP. That is, only one resource pool may be configured to be present within a single RBS to include most frequency resources. Through this, the aforementioned regulation may be satisfied. Here, for example, sidelink transmission may be performed by selecting a resource used for actual transmission through interlace-based frequency resource assignment from a resource pool configured based on consecutive frequency resources.

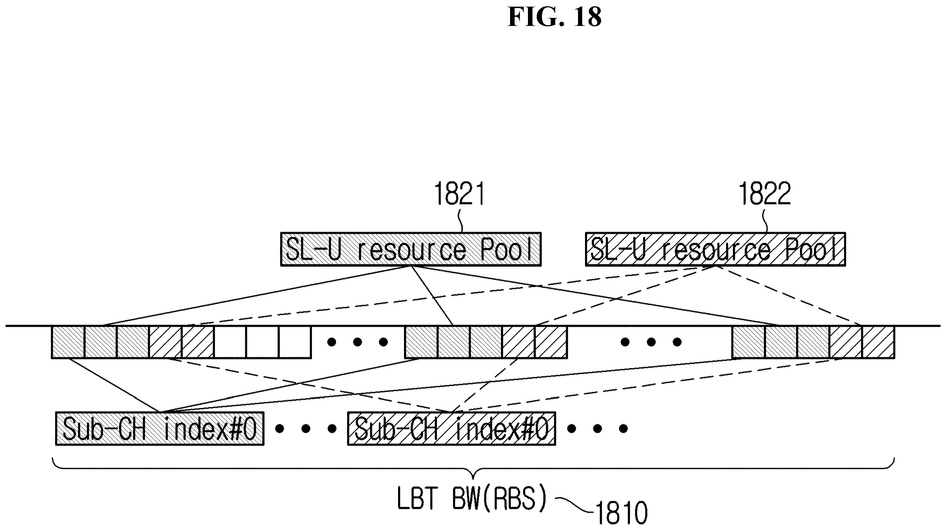

On the other hand, FIG. 18 illustrates a frequency resource-based sidelink unlicensed band resource pool configuration using interlace assignment to which the present disclosure may apply. Referring to FIG. 18, to satisfy the regulation for frequency utilization in the unlicensed band, a resource pool may be configured using a new interlace RB or an interlace RB-based subchannel from an initial resource pool configuration stage. That is, the interlace RB or the interlace RB-based subchannel may be used from resource pool configuration. For example, referring to FIG. 18, in the case of configuring a frequency resource-based sidelink unlicensed band resource pool using interlace assignment, frequency resources for resource pool configuration may be indicated based on combination of RBS and interlace /subchannel index (hereinafter, Case 2).

That is, in FIG. 18, to meet the requirements such as the aforementioned OCB and PSD, resource pools 1821 and 1822 may be configured using interlace RBs or interlace RB-based subchannels from the initial resource pool configuration stage. Therefore, the resource pools 1821 and 1822 of the sidelink unlicensed band may not have a consecutive subchannel or PRB structure. That is, the resource pools 1821 and 1822 of the sidelink unlicensed band may be configured in nonconsecutive PRBs based on interlace assignment and may meet the requirements such as the aforementioned OCB and PSD accordingly. Also, dissimilar to Case 1 (FIG. 17), a plurality of resource pools of the sidelink unlicensed band may be configured in a single RBS and thus, flexibility of resource configuration may be provided.

Here, all the resource pool configuration methods corresponding to the aforementioned Case 1 and Case 2 may consider the interlace-based frequency resource assignment method. However, there may be a difference regarding whether to configure frequency resources with consecutive frequency resources in a stage of configuring a single resource pool, which is similar to the existing NR SL, (Case 1) or whether to configure a nonconsecutive resource pool in consideration of an interlace structure from a resource pool configuration stage (Case 2). In the following, an RBS-based sidelink unlicensed band resource pool configuration method is described based on the above.

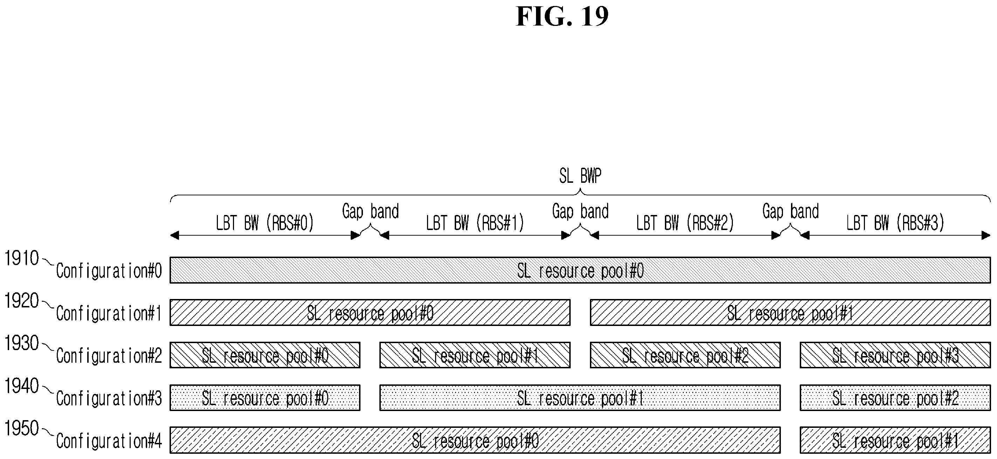

FIG. 19 illustrates a sidelink unlicensed band resource pool configuration method applicable to the present disclosure.

A sidelink unlicensed band resource pool may be configured based on RBS. For example, the sidelink resource pool may be configured through a resource pool start point and the number of subchannels within the resource pool based on consecutive subchannels. For example, as described above, even in the sidelink unlicensed band pool, the resource pool corresponding to the LBT BW may be configured through the resource pool start point and the number of subchannels within the resource pool based on consecutive subchannels. RBS configuration and index may be considered to effectively configure the sidelink unlicensed band resource pool. That is, the sidelink unlicensed band resource pool may configure a single resource pool by indicating the RBS configuration/index through resource pool configuration signaling.

As a detailed example, a single resource pool may include one RBS or one or more RBSs. Therefore, in the case of a specific resource pool, frequency configuration for the resource pool may be performed by providing consecutive RBS index configuration associated with the specific resource pool. Here, in the case of performing frequency configuration of the resource pool based on consecutive RBS index configuration, the resource pool may utilize gap band resources between RBSs, thereby maximizing frequency resource efficiency. A case in which four RBSs are configured within a single sidelink BWP may be considered. Here, since a gap band may be configured between the respective RBSs, 3 gap bands may be configured and provided. Here, the resource pool of the sidelink unlicensed band may be configured through consecutive RBS indexes based on the LBT BW. In detail, in a single resource pool configuration, frequency domain resource configuration may be provided through RBS index information. For example, in one resource pool configuration, frequency domain resource configuration may be provided through information on a start RBS index and the number of consecutive RBSs.

Referring to FIG. 19, in configuration 0 1910, a resource pool may be configured with four consecutive RBSs from RBS#0 to RBS#3. Here, configuration 0 1910 may indicate resource pool configuration by indicating RBS#0 that is a start RBS index and 4 that is the number of consecutive RBSs. As still another example, in configuration 1 1920, as two consecutive RBSs, RBS#0 and RBS#1 may be configured as sidelink resource pool#0, and RBS#2 and RBS#3 may be configured as sidelink resource pool #1. Here, configuration 1 1920 may indicate resource pool configuration by indicating RBS#0, RBS#2 that is a start RBS index and 2 that is the number of consecutive RBSs for each resource pool. As still another example, in configuration 2 1930, sidelink resource pool#0 may be configured in RBS#0, sidelink resource pool#1 may be configured in RBS#1, sidelink resource pool#2 may be configured in RBS#2, and sidelink resource pool#3 may be configured in RBS#3. Here, since each resource pool corresponds to each RBS, the corresponding RBS index and the number of RBSs, 1, may be indicated. As still another example, in configuration 3 1940, sidelink resource pool#0 may be configured in RBS#0, sidelink resource pool#1 may be configured in RBS#1 and RBS#2, and sidelink resource pool#2 may be configured in RBS#3. Here, the start RBS index and the number of RBSs corresponding to each sidelink resource pool may be indicated and, through this, configuration for each resource pool may be indicated. As still another example, in configuration 4 1950, sidelink resource pool#0 may be configured in RBS#0, RBS#1, and RBS#2, and sidelink resource pool#1 may be configured in RB S#3. Here, the start RBS index and the number of RBSs corresponding to each sidelink resource pool may be indicated and, through this, configuration for each resource pool may be indicated. However, resource pool configuration of FIG. 19 is only an example and may not be limited to the aforementioned embodiment.

Here, for example, when a plurality of RBSs are configured in the SL BWP, frequency resource information for resource pool configuration of the sidelink unlicensed band may be indicated to the UE through at least one of interlace/subchannel-based configuration information and RBS configuration information.

Here, when all the interlace/subchannel-based configuration information and RBS configuration information are provided, frequency resource configuration information for a single resource pool may be provided to the UE through frequency resource information. Also, when an intra-cell guard band (GB) present between consecutive RBSs is configured within a single resource pool, frequency resources corresponding to the GB may be used for sidelink unlicensed band communication as a portion of the resource pool.

In the following, a method of assigning frequency resources for sidelink unlicensed band data transmission and reception in the frequency domain is described above on the above. The matters described below may be applicable to all the aforementioned methods of configuring the resource pool of at least one of interlace/subchannel-based configuration information and RBS configuration information, and are not limited to a specific embodiment.

Also, for example, the following matters may be applicable to both a case in which consecutive frequency resources are configured as a single resource pool (Case 1) and a case in which the resource pool is configured based on nonconsecutive frequency resources (Case 2). However, for clarity of description, description is made based on the case in which a single resource pool is configured based on consecutive frequency resources (Case 1), but may be interchangeably applied even to the case in which the resource pool is configured based on nonconsecutive frequency resources (Case 2), and may not be limited to a specific form.

For example, frequency resource configuration of the sidelink unlicensed band may be configured according to start subchannel information and the number of subchannels based on consecutive frequency resources. Also, time resource configuration of the sidelink unlicensed band may be based on at least one of an SSB transmission slot, a reserved slot, and TDD UL-DL configuration, and the resource pool may be configured by applying a bitmap among remaining slots, and this may not be limited to a specific embodiment.

However, the following description is made based on frequency resource configuration of the sidelink unlicensed band. For example, indication (i.e., bit size) for a sidelink resource set (SL RBS) index may be set in consideration of the total number of SL RBSs included in a single SL BWP. Here, indication for the SL RBS index may indicate one or a plurality of SL RBS indexes. For example, SL RBSs may be consecutively configured in the frequency domain, but may not be limited thereto. Here, for clarity of description, the following description is made based on SL RBSs that are consecutively configured in the frequency domain.

Also, for example, frequency resource reservation may be indicated through physical sidelink control channel (PSCCH). Here, frequency resource reservation indication may be performed in a second slot or second slot/third slot based on the PSCCH received within a lowest interlace index among interlace indexes defined within a single carrier bandwidth. The interlace structure may be set to 10 interlaces (i.e., M=10) in 15 kHz SCS and may be set to 5 interlaces (i.e., M=5) in 30 kHz SCS, based on the LBT BW that is considered in the unlicensed band, which is described above. In detail, as described above, the interlace structure may be configured by considering that the number of RBs for constituting a single RBS is 100 to 110 RBs in 15 kHz SCS and 50 to 55 RBs in 30 kHz SCS based on the LBT BW.

That is, in the case of 15 kHz SCS, some resources (i.e., RB) of the same interlace may be present every 10 RBs. Here, an interlace value may be configured with a difference value based on at least one of a different RBS size (LBT BW), SCS, and the number of RBs constituting a single interlace, and may not be limited to a specific embodiment.

## CRB-to-SL interlace index mapping method (CRB-to-SL Interlace mapping) and SL interlace(s) and subchannel mapping method (Interlace index-to-SubCH mapping)

For example, k interlaces may be set to constitute a single subchannel. Here, k may be an integer or excluding 0 or a fraction (or number of decimal points). If k is an integer, k interlaces may be set to a single subchannel. On the other hand, if k is a fraction (or number of decimal points), a plurality of subchannels may be associated with a single interlace index. For example, if k=1/2, a single interlace index may correspond to two subchannel indexes.

The following description is made based on the fact that CRB and interlace indexing is performed from carrier perspective. That is, description is made based on the fact that the CRB starts from point A and interlace indexing is performed based on the CRB, but may not be limited thereto.

Also, for example, RBS configuration for the sidelink unlicensed band may be provided according to intra-cell guard band configuration based on the CRB, which may be the same as FIG. 9 described above. Here, when the SL BWP is configured, at least one resource may be configured within the SL BWP. Also, a single resource pool may be configured to be included in at least one RBS. On the other hand, subchannel indexing may be independently performed within a single resource pool, but may not be limited thereto.

Here, for example, interlace index assignment in the CRB may be performed based on two methods. In detail, interlace index assignment may be uniformly performed based on an interval (M) in the CRB within the frequency domain (hereinafter, Option 1). Alternatively, interlace index assignment may be non-uniformly performed in the CRB within the frequency domain (hereinafter, Option 2). When interlace indexes are allocated based on Option 2, the interlace indexes may be randomly allocated or may be allocated based on interleaving-based indexing.

After interlace index assignment, assignment between the allocated interlace index and each subchannel may be performed based on two methods. For example, each subchannel index constituting a single resource pool may be mapped to each of consecutive sidelink interlace index(es) (hereinafter, Option A). Alternatively, each subchannel index constituting a single resource pool may be mapped to nonconsecutive sidelink interlace index(es) (hereinafter, Option B).

Also, for example, a case in which a plurality of RBSs are configured in a single resource pool within a single BWP may be considered. Here, relationships between the subchannel index and the sidelink interlace index may be different. For example, the subchannel index-and-sidelink interlace index relationship may be applied to all RBSs configured within a single resource pool (hereinafter, Option I). For example, when the subchannel index-and-sidelink interlace index relationship is applied to all RBSs configured within a single resource pool, the same relationship may be applied even to guard band resources between RBSs, but may not be limited thereto.

Alternatively, the subchannel index-and-sidelink interlace index relationship may be independently applied for each RBS configured within a single resource pool (hereinafter, Option II). Here, since the subchannel index-and-sidelink interlace index relationship is independently applied for each RBS, the aforementioned relationship may not be applied to the guard band. Alternatively, the subchannel index-and-sidelink interlace index relationship may be independently applied to every some RBS among RBSs configured within a single resource pool (Option III). Here, for example, when some RBSs are consecutive RBSs, the same subchannel index-and-sidelink interlace index relationship may be applied to the guard band with the consecutive RBSs, but is not limited to a specific embodiment.

Additionally, higher layer configuration may be performed such that the subchannel index-and-interlace index relationship sequentially corresponds to a lowest subchannel index, starting from a lowest interlace index. As still another example, the subchannel index-and-interlace index relationship may be sequentially configured such that an interlace index corresponding to a lowest frequency resource in the frequency domain within the resource pool is allocated to a lowest subchannel index, and is not limited to a specific embodiment.

In the following, a method of applying all or some of a plurality of combinations of the aforementioned Options 1/2, Options A/B, and Options I/II/III is described. For exemption, all methods based on combinations of the aforementioned Options 1/2, Options A/B, and Options I/II/III may be applied to the sidelink unlicensed band. As still another example, some of the methods based on combinations of the aforementioned Options 1/2, Options A/B, and Options I/II/III may be applied to the sidelink unlicensed band.

As still another example, each of the methods based on combinations of the aforementioned Options 1/2, Options A/B, and Options I/II/III may be independently applied regardless of other methods. Here, which method among combinations configurable based on the above is applied may be indicated through higher layer configuration. That is, a parameter may be set to at least one of the aforementioned options and an option applied through each of parameters may be indicated through higher layer configuration. As still another example, which method among combinations configurable based on the above may be configured in advance. That is, although each of the aforementioned combinations is described below for clarity of description, only a predetermined specific method may be applied and there may be no need to consider all the following combinations. As still another example, among combinations configurable based on the above, some options may be indicated through higher layer configuration and some options may be applicable through a predetermined method, and this may not be limited to a specific embodiment.

As a detailed example, Option 1-A may represent an option based on combination of Option 1 and Option A. Likewise, Option 2-A may represent an option based on combination of Option 2 and Option A. Also, Option 2-B may represent an operation based on combination of Option 2 and Option B. Here, the aforementioned Option I, Option II, and Option III may be additionally applied in addition to the aforementioned combinations, by considering a case in which a plurality of RBSs are configured in a single resource pool within a single BWP. For example, relationship configuration between final subchannel and interlace and CRB may be generated based on the aforementioned combinations.

Here, for example, interlace configuration of Table 17 below may be considered based on LBT BW 20 MHz (i.e., RBS size) of the sidelink unlicensed band. However, it is only an example and a different value may be considered according to a different SCS value, the interlace structure, and the entire RBS size, and is not limited to a specific embodiment. Here, CRB and interlace indexing may be performed based on point A within a single carrier bandwidth. For example, the aforementioned configuration may be a value that is determined according to SCS, a frequency band of the unlicensed band, and carrier bandwidth.

[Table 17]

| |
|---|
| - 15 kHz SCS => 100~110 PRBs, M=10 (RB unit interval between the same interlaces =10 PRB) |
| - 30 kHz SCS => 50~55 PRBs, M=5 (RB unit interval between the same interlaces =5 PRB) |

## Option 1 (uniform-based CRB-to-interlace index relationship configuration method)

When a uniform-based CRB-to-interlace index assignment method is configured through a higher layer, M interlace resource blocks may be set for each 15 kHz SCS ($\mu$=0) and 30 kHz SCS ($\mu$=1) as shown in Table 18 below. Here, consecutive interlace indexes ($m \in \{0,1, ..., M - 1\}$) may be configured in CRBs ($\{m, M + m, 2M + m, 3M + m, ...\}$) in the frequency domain. Relationship between interlace RB $n^{\mu}_{\text{IRB},m} \in \{0,1, ... \}$ of consecutive interlace m of SL BWP i and CRB $n^{\mu}_{\text{CRB}}$ may be determined according to Equation 6 below.

[Table 18]

| μ | M |
|---|---|
| 0 | 10 |
| 1 | 5 |

[Equation 6]

$$n_{\text{CRB}}^{\mu} = M n_{\text{IRB},m}^{\mu} + N_{\text{BWP},i}^{\text{start},\mu} + \left( \left( \text{m} - N_{\text{BWP},i}^{\text{start},\mu} \right) \bmod M \right)$$

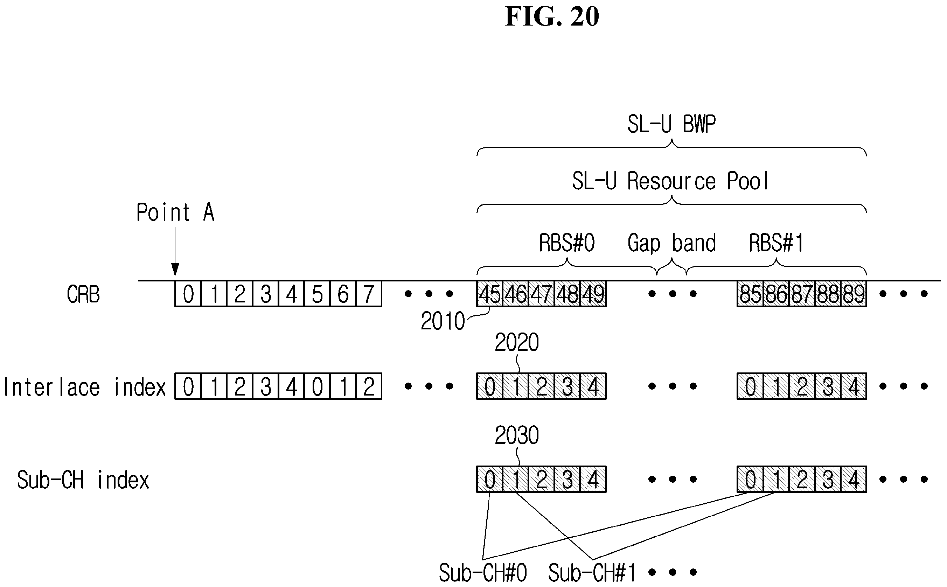

For example, FIG. 20 illustrates a case in which a subchannel index is mapped to consecutive sidelink interlace indexes based on uniform CRB-to-interlace index relationship, applicable to the present disclosure. Referring to FIG. 20, in the frequency domain, an interlace index may be allocated in a consecutive CRB and mapping relationship between an interlace index and a subchannel index may be configured. Here, interlace (M) and subchannel (N) may have a one-to-one relationship (i.e., k=1). For example, when two or more interlace indexes are configured to be allocated to a single subchannel index (k=2), two consecutive interlace indexes may be allocated to a single subchannel. When two interlace indexes are allocated to a single subchannel index, interlace indexes #0 and #1 may be mapped to subchannel index #0, interlace indexes #2 and #3 may be mapped to subchannel index #1, and interlace indexes #4 and #0 may be mapped to subchannel index #2, and sequential mapping may be performed in the same manner.

Here, as an assignment method between an interlace and a subchannel, only resources that have multiple relationship for subchannel and interlace mapping within the number of interlaces (M) may be used as sidelink resources. For example, if there are remaining interlace resources after applying the aforementioned multiple relationship, the corresponding resources may not be used. As still another example, configuration may be restricted to have only the multiple relationship with respect to each other at all times, but this is not limited to a specific embodiment.

Here, for clarity of description, FIG. 20 is described based on a case in which interlace (M) and subchannel (N) have a one-to-one relationship. In detail, an SL-U resource pool may be configured in an SL-U BWP in a specific CRB 2010 based on consecutive CRBs and point A. Two consecutive RBSs maybe included in the SL-U resource pool.

Here, interlace indexes may be allocated based on Equation 6 above, starting from interlace index #0 2020 based on the specific CRB 2010. Also, subchannel indexes may be sequentially mapped, starting from lowest subchannel index #0 2030 corresponding to the lowest interlace index #0 2020. Based on the above, in the CRB within the frequency domain, interlace indexes may be uniformly allocated based on a certain interval (M), and each subchannel index constituting a single resource pool may be mapped to each of consecutive sidelink indexes, which may be the aforementioned Option 1-A method.

## Option 2 (non-uniform-based CRB-to-interlace index relationship configuration method)

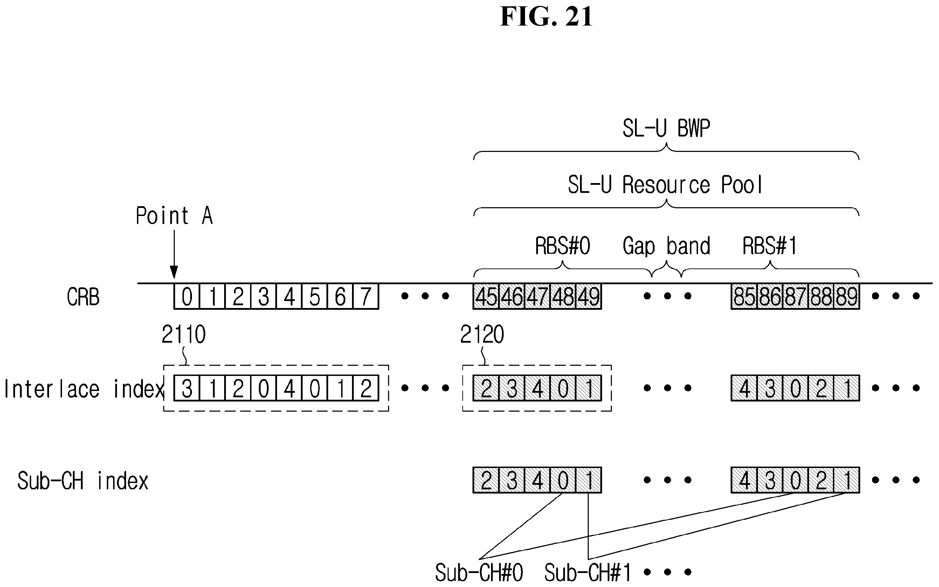

FIG. 21 illustrates a case in which a CRB-to-interlace index is non-uniformly allocated and a subchannel index is mapped to each of consecutive interlace indexes, applicable to the present disclosure. Referring to FIG. 21, in CRB in the frequency domain, interlace indexes may be non-uniformly allocated. That is, interlace indexing may be applied in different order for each interlace block. For example, an interlace block may be a set of interlaces corresponding to the number of interlaces. In detail, a first interlace block 2110 may be a set of interlaces corresponding to the number of interlaces (M=5). Here, FIG. 21 may correspond to a case in which two RBSs are configured in a single SL-U resource pool in a single SL-U BWP. For example, an interlace index may be allocated based on consecutive CRB and point A, and, as described above, interlace indexing may be applied in different order for each interlace block. For example, in the SL-U resource pool, interlace indexing may be applied to an interlace block 2120 in order different from the first interlace block 2110. Through this, CRB-to-interlace index relationship may be non-uniformly configured. Here, a subchannel index may be mapped to consecutive interlace indexes. That is, the subchannel index may be mapped to a lowest interlace index. That is, interlace index #0 and subchannel index #0 may be mapped. Therefore, FIG. 21 may be Option 2-A method based on the aforementioned options.

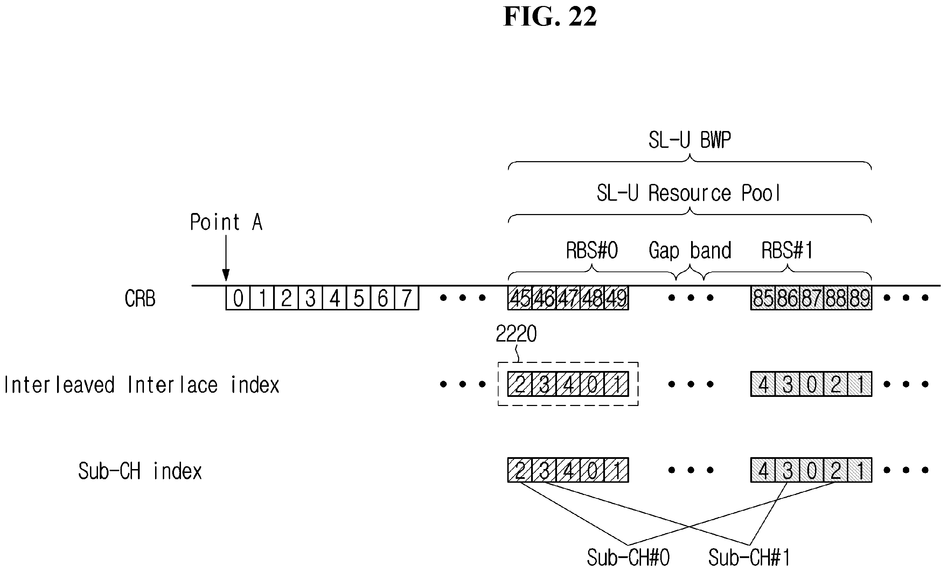

On the other hand, FIG. 22 illustrates a method of assigning a subchannel index based on an interlace index within a lowest interlace block (M) 2210 in a frequency of a resource pool. Here, each subchannel index may be allocated sequentially from #0 to a maximum subchannel index based on an interlace index (same index) corresponding to a lowest interlace. That is, interlace index #2 of a lowest frequency resource block within the interlace block 2210 may be mapped to subchannel index #0, subsequent interlace index #3 may be mapped to subchannel index #1, and an interlace index and a subchannel index may be mapped based on the same method. Here, the same subchannel index may be mapped to the same interlace index. For example, in FIG. 22, an indexing method may be differently applied depending on a location in the frequency domain compared to FIG. 21.

For example, when non-uniform-based CRB-to-interlace index relationship is configured, the number of interlace resource blocks may be determined based on Table 18 above. Here, in the frequency domain, interlace index ($m \in \{0,1, ... , M - 1\}$) may form relationship with the CRB in a non-uniform form. Relationship between interlace

$\text{RB}(n_{\text{IRB},m}^{\mu} \in \{0,1, ...\})$ of consecutive interlace m of SL BWP i and interlace $\text{CRB}\ (n_{\text{CRB}}^{\mu})$ may be determined

according to Equation 7 below. $N_{\text{BWP},i}^{\text{start},\mu}$ may be a CRB index for relative BWP start to CRB #0. Additionally, relationship between consecutive interlace m and non-uniform interlace m' may be considered.

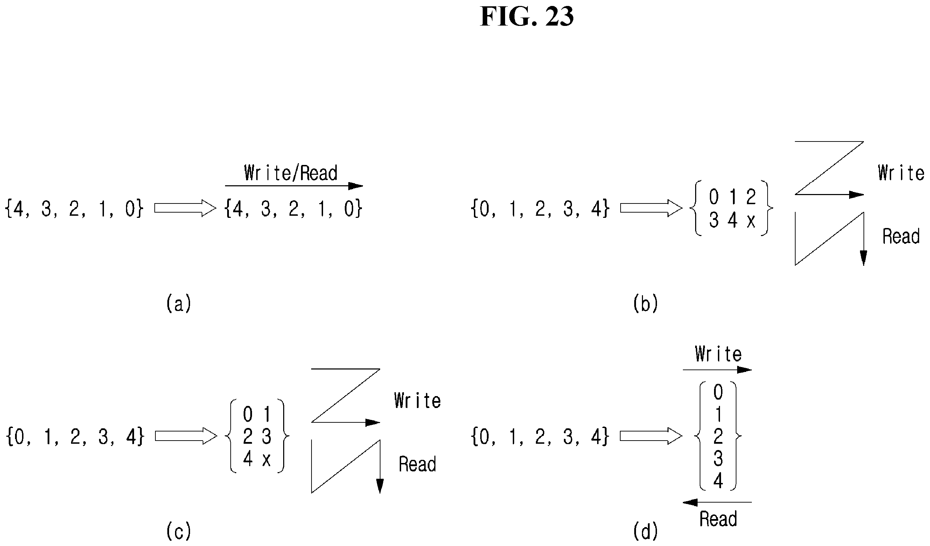

As a detailed example, the non-uniform interlace m' may be generated by applying a cyclic block interleaver every interlace block (M). As a detailed example, if M=5, X x Y block interleaver set may be as shown in Table 19 below and FIG. 23.

[Table 19]

| |
|---|
| (a) block interleaver index No. 1: 1 x 5, |
| (b) block interleaver index No. 2: 2 x 3, |
| (c) block interleaver index No. 3: 3 x 2 or |
| (d) block interleaver index No. 4: 5 x 1 |

[Equation 7]

$$n_{\text{CRB}}^{\mu} = M n_{\text{IRB},m}^{\mu} + N_{\text{BWP},i}^{\text{start},\mu} + \left( \left( m - N_{\text{BWP},i}^{\text{start},\mu} \right) \bmod M \right)$$

$$m' = f_{inter}(m)$$

Here, considering 23, Table 19, and Equation 7, a CRB-to-interlace assignment method using a block interleaver may be finally configured based on "CRB - consecutive interlace index - interleaved interlace index." Also, based on the above, mapping may be performed as shown in FIG. 22 according to relationship between the CRB and the interleaved interlace. Block interleavers may configure relationship with consecutive interlaces according to a cyclically predefined pattern or high layer configuration every M interlaces (interlace block). As a detailed example, block interleavers may be cyclically configured according to a pattern every M interlaces, such as "No. 1->No. 4->No. 2->No. 3->No. 1->No. 4->No. 2->No. 3 ...." Here, for example, the relationship between block interleavers and consecutive interlace indexes may be preconfigured relationship. As still another example, the aforementioned cyclical pattern may be determined according to higher layer configuration.

Also, a random cyclic block interleaver may be applied to each interlace block (M). For example, as described above, a cyclic block interleaver may be determined according to a preconfigured pattern or configuration. Here, the cyclic block interleaver may generate and cyclically apply block interleaver index i that is determined through random sequence, and may consider Equation 8 below.

Also, for example, length 31 gold sequence may be used to generate a random block interleaver index. Here, random sequence c(n) may be as shown in Equation 9 below, but may not be limited thereto. For example, in Equation 9, $N_C$ = 1600, first m-sequence, and $x_1(n)$ may be initialized by $x_1(0)$ = 1, $x_1(n)$ = 0, $n$ = 1,2,...,30. Also, initialization of second m-sequence and $x_2(n)$ may be performed according to Equation 10 below. Here, initialization may be performed according to Equation 10 below, based on an initial value that is determined according to a situation in which corresponding sequence is applied. Also, for example, initial value $c_{init}$ of random sequence c(i) generator for generating a block interleaver index may be a specific value (e.g., $c_{init}$ = 1010). As still another example, the initial value may use at least one of sidelink ID that represents a link between a cast type and a UE, sidelink synchronization ID, and BWP or SL carrier-related ID (partial) information. Sets of block interleaver indexes may be predetermined or configured through a higher layer.

[Equation 8]

$$n_{\text{CRB}}^{\mu} = M n_{\text{IRB},m}^{\mu} + N_{\text{BWP},i}^{\text{start},\mu} + \left( \left( \text{m} - N_{\text{BWP},i}^{\text{start},\mu} \right) \text{mod } M \right)$$

$$m' = f_{inter,i}(m)$$

$$i = \sum_{n=0}^{B-1} 2^n \, c(B \cdot k + n) \qquad k \in \{0, 1, 2, \dots\}$$

[Equation 9]

$$c(n) = \left( x_1(n + N_C) + x_2(n + N_C) \right) \text{mod } 2$$
$$x_1(n + 31) = \left( x_1(n + 3) + x_1(n) \right) \text{mod } 2$$
$$x_2(n + 31) = \left( x_2(n + 3) + x_2(n + 2) + x_2(n + 1) + x_2(n) \right) \text{mod } 2$$

[Equation 10]

$$c_{\text{init}} = \sum_{i=0}^{30} x_2(i) \cdot 2^i$$

As still another example, non-uniform CRB-to-interlace index relationship may be determined according to Equation 11 below, based on combination of at least one block interleaver and random function for each interlace block (M).

[Equation 11]

$$n_{\text{CRB}}^{\mu} = n_{\text{IRB},m}^{\mu} + N_{\text{BWP},i}^{\text{start},\mu} + \left( \left( \text{m} - N_{\text{BWP},i}^{\text{start},\mu} \right) \text{mod } M \right)$$

$$m' = f_{inter}(m) + \sum_{n=0}^{\lceil \log_2 M \rceil - 1} 2^n \, c(\lceil \log_2 M \rceil \cdot k + n) \qquad k \in \{0, 1, 2, \dots\}$$

Here, the initial value $c_{init}$ of the random sequence c(i) generator may be a specific value (e.g., $c_{init}$ = 1010). As still another example, the initial value may use at least one of sidelink ID that represents a link between a cast type and a UE, sidelink synchronization ID, and BWP or SL carrier-related ID (partial) information. Sets of block interleaver indexes may be predetermined or configured through a higher layer.

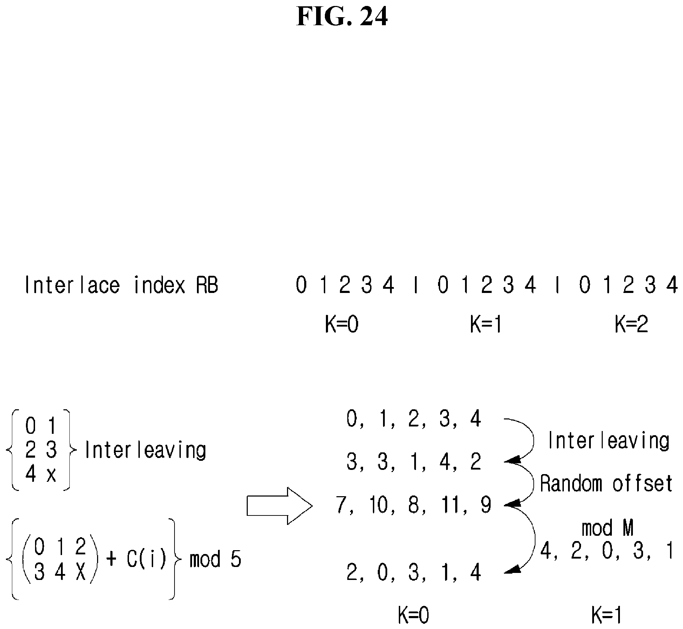

Also, function $f_{inter}(m)$ may be a block interleaver that interleaves $m \in [0,1, ..., M - 1]$ sequential interlace indexes as in the aforementioned method and generates an independent interleaved interlace every M interlace RBs. Also, additionally, a more random interleaving index than the aforementioned method may be generated by independently adding a specific offset value generated through random sequence to every M interlaces. Here, FIG. 24 illustrates a method of configuring a non-uniform CRB-to-interlace index based on block interleaver and random function combination, applicable to the present disclosure.

Referring to FIG. 24, after applying a specific block interleaver (e.g., 2 x 3), a random offset value may be added to every M interlaces. Here, independent interleaved interlace indexes may be generated every M interlaces (i.e., k=0, 1, 2 ...). Here, as described above, the relationship of "CRB - consecutive interlace index - interleaved interlace index" may be ultimately considered, and relationship between the CRB and the interleaved interlace index may be configured. Here, as shown in FIG. 24, the block interleaver may be configured to have a size of X x Y according to a size of a single interlace block. For example, when configured with five interlaces, a block interleaver structure such as "X x Y= {3 x 2 or 2 x 3}" may be used based on five interlaces of 0 to 4. After the block interleaver structure is applied to interlaces, a random offset value may be independently generated using random sequence and added to each interlace block. Then, a "mod M" operation may be applied to the interlace block to which the random offset value is added and, based thereon, non-uniform-based CRB-to-interlace index assignment may be ultimately performed, which may be as shown in FIG. 24. As still another example, a random interlace index may be generated using random sequence generation within the number of interlaces. That is, different interlace assignment may also be performed every K index using a random sequence generator without using block interleaving for the interlace block.

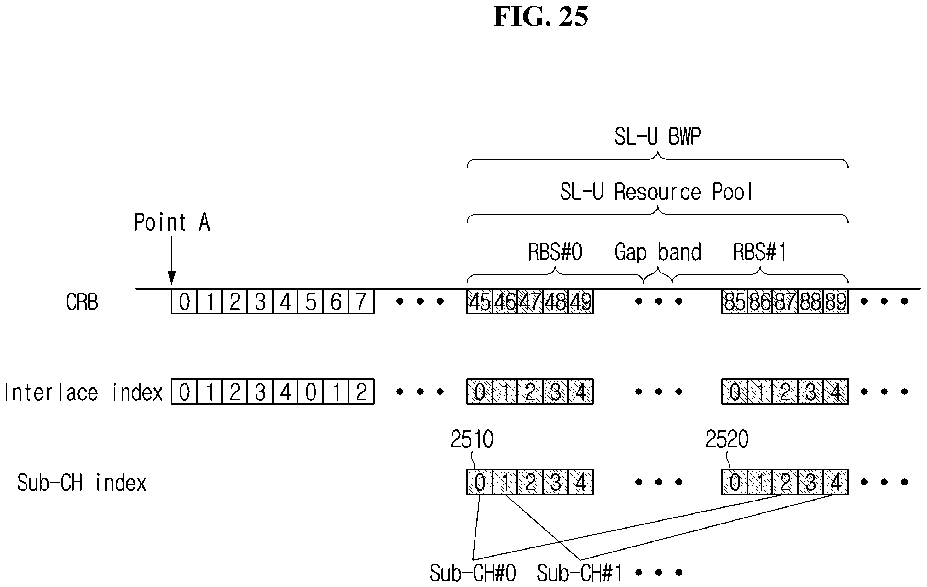

FIG. 25 illustrates a method of mapping each of subchannel indexes constituting a single resource pool to nonconsecutive sidelink indexes, applicable to the present disclosure. Referring to FIG. 25, different interlace indexes may be mapped to a single subchannel index every M interlaces. As a detailed example, subchannel indexing may be defined through one resource pool configuration. Referring to FIG. 25, since a subchannel index is set through one resource pool configuration, subchannel index #0 may be allocated to an RB 2510 corresponding to interlace index #0 and an RB 2520 corresponding to interlace index #2, which may be a state different from FIGS. 20 to 22 described above. That is, the lowest interlace index may not be mapped to the lowest subchannel index, or an interlace within an interlace block with the lowest frequency may not be mapped to a subchannel index.

For example, Table 20 below may represent a case in which subchannels with M=10 and N=5 are configured in a single resource pool based on an interlace structure. Here, since two interlace indexes are mapped to a single subchannel, k may be 2. On the other hand, Table 21 may represent a case in which subchannels with M=10 and N=10 are configured in a single resource pool based on an interlace structure. Here, since a single interlace index is mapped to a single subchannel, k may be 1. As still another example, Table 22 may represent a case in which subchannels with M=10 and N=20 are configured in a single resource pool based on an interlace structure. Here, since two subchannel indexes are mapped to a single interlace index, k may be 1/2.

For example, since subchannel indexing is defined through one resource pool configuration, assignment relationship of CRB, interlace, and subchannel may be configured as shown in Tables 20, 21, and 22 below. For example, in Tables 20, 21, and 22 below, various numbers of associated interlaces per subchannel may be configured according to configuration based on the number of subchannels (N) or subchannel size (number of RBs), based on an M=10-based consecutive interlace structure corresponding to 15 kHz SCS.

Here, for example, the number of interlace indexes associated with a single subchannel may be determined according to a value of M and the number of subchannels configured for a single resource pool (N). As still another example, the interlace-and-subchannel relationship may be determined using the number of RBs per subchannel rather than the number of configured subchannels. Based on the above, two interlaces may be associated per single subchannel (Table 20), a single interlace may be associated per single subchannel (Table 21), or a single interlace may be associated per two subchannels (Table 22), based on [N:M] that is a ratio between the number of subchannels and the number of interlaces. Therefore, in the sidelink unlicensed band, the number of RBs per subchannel may be automatically determined with higher layer parameter configuration that is defined in sidelink according to the [N:M] ratio.

[Table 20]

| CRB | interlace index | Sub-CH index |
|-----|-----------------|--------------|
| 0 | 0 | |
| 1 | 1 | |
| 2 | 2 | |
| 3 | 3 | |
| 4 | 4 | |
| 5 | 5 | |
| 6 | 6 | |
| 7 | 7 | |
| 8 | 8 | |
| 9 | 9 | |
| 10 | 0 | |
| 11 | 1 | |
| 12 | 2 | |
| 13 | 3 | |
| 14 | 4 | |
| 15 | 5 | |
| 16 | 6 | |
| 17 | 7 | |

(continued)

| CRB | interlace index | Sub-CH index |
|---|---|---|
| 18 | 8 | |
| 19 | 9 | |
| 20 | 0 | |
| 21 | 1 | |
| 22 | 2 | |
| 23 | 3 | |
| **24** | **4** | **0** |
| 25 | 5 | 1 |
| 26 | 6 | 2 |
| 27 | 7 | 3 |
| 28 | 8 | 4 |
| **29** | **9** | **0** |
| 30 | 0 | 1 |
| 31 | 1 | 2 |
| 32 | 2 | 3 |
| 33 | 3 | 4 |
| **34** | **4** | **0** |
| 35 | 5 | 1 |
| 36 | 6 | 2 |
| 37 | 7 | 3 |
| 38 | 8 | 4 |
| **39** | **9** | **0** |
| 40 | 0 | 1 |
| 41 | 1 | 2 |
| 42 | 2 | 3 |
| 43 | 3 | 4 |
| **44** | **4** | **0** |
| 45 | 5 | 1 |
| 46 | 6 | 2 |
| 47 | 7 | 3 |
| 48 | 8 | 4 |
| **49** | **9** | **0** |
| 50 | 0 | 1 |
| 51 | 1 | 2 |
| 52 | 2 | 3 |
| 53 | 3 | 4 |
| **54** | **4** | **0** |
| 55 | 5 | 1 |
| 56 | 6 | 2 |

(continued)

| CRB | interlace index | Sub-CH index |
|---|---|---|
| 57 | 7 | 3 |
| 58 | 8 | 4 |
| **59** | **9** | **0** |
| 60 | 0 | 1 |
| 61 | 1 | 2 |
| 62 | 2 | 3 |
| 63 | 3 | 4 |
| **64** | **4** | **0** |
| 65 | 5 | 1 |
| 66 | 6 | 2 |
| 67 | 7 | 3 |
| 68 | 8 | 4 |
| **69** | **9** | **0** |
| 70 | 0 | 1 |
| 71 | 1 | 2 |
| 72 | 2 | 3 |
| 73 | 3 | 4 |
| **74** | **4** | |
| 75 | 5 | |
| 76 | 6 | |
| 77 | 7 | |
| 78 | 8 | |
| 79 | 9 | |

[Table 21]

| CRB | interlace index | Sub-CH index |
|---|---|---|
| 0 | 0 | |
| 1 | 1 | |
| 2 | 2 | |
| 3 | 3 | |
| 4 | 4 | |
| 5 | 5 | |
| 6 | 6 | |
| 7 | 7 | |
| 8 | 8 | |
| 9 | 9 | |
| 10 | 0 | |
| 11 | 1 | |
| 12 | 2 | |

(continued)

| CRB | interlace index | Sub-CH index |
|---|---|---|
| 13 | 3 | |
| 14 | 4 | |
| 15 | 5 | |
| 16 | 6 | |
| 17 | 7 | |
| 18 | 8 | |
| 19 | 9 | |
| 20 | 0 | |
| 21 | 1 | |
| 22 | 2 | |
| 23 | 3 | |
| **24** | **4** | **0** |
| 25 | 5 | 1 |
| 26 | 6 | 2 |
| 27 | 7 | 3 |
| 28 | 8 | 4 |
| 29 | 9 | 5 |
| 30 | 0 | 6 |
| 31 | 1 | 7 |
| 32 | 2 | 8 |
| 33 | 3 | 9 |
| **34** | **4** | **0** |
| 35 | 5 | 1 |
| 36 | 6 | 2 |
| 37 | 7 | 3 |
| 38 | 8 | 4 |
| 39 | 9 | 5 |
| 40 | 0 | 6 |
| 41 | 1 | 7 |
| 42 | 2 | 8 |
| 43 | 3 | 9 |
| **44** | **4** | **0** |
| 45 | 5 | 1 |
| 46 | 6 | 2 |
| 47 | 7 | 3 |
| 48 | 8 | 4 |
| 49 | 9 | 5 |
| 50 | 0 | 6 |
| 51 | 1 | 7 |

(continued)

| CRB | interlace index | Sub-CH index |
|-----|-----------------|--------------|
| 52 | 2 | 8 |
| 53 | 3 | 9 |
| **54** | **4** | **0** |
| 55 | 5 | 1 |
| 56 | 6 | 2 |
| 57 | 7 | 3 |
| 58 | 8 | 4 |
| 59 | 9 | 5 |
| 60 | 0 | 6 |
| 61 | 1 | 7 |
| 62 | 2 | 8 |
| 63 | 3 | 9 |
| **64** | **4** | **0** |
| 65 | 5 | 1 |
| 66 | 6 | 2 |
| 67 | 7 | 3 |
| 68 | 8 | 4 |
| 69 | 9 | 5 |
| 70 | 0 | 6 |
| 71 | 1 | 7 |
| 72 | 2 | 8 |
| 73 | 3 | 9 |
| 74 | 4 | |
| 75 | 5 | |
| 76 | 6 | |
| 77 | 7 | |
| 78 | 8 | |
| 79 | 9 | |

[Table 22]

| CRB | interlace index | Sub-CH index |
|-----|-----------------|--------------|
| 0 | 0 | |
| 1 | 1 | |
| 2 | 2 | |
| 3 | 3 | |
| 4 | 4 | |
| 5 | 5 | |
| 6 | 6 | |
| 7 | 7 | |

(continued)

| CRB | interlace index | Sub-CH index |
|---|---|---|
| 8 | 8 | |
| 9 | 9 | |
| 10 | 0 | |
| 11 | 1 | |
| 12 | 2 | |
| 13 | 3 | |
| 14 | 4 | |
| 15 | 5 | |
| 16 | 6 | |
| 17 | 7 | |
| 18 | 8 | |
| 19 | 9 | |
| 20 | 0 | |
| 21 | 1 | |
| 22 | 2 | |
| 23 | 3 | |
| **24** | **4** | **0** |
| 25 | 5 | 1 |
| 26 | 6 | 2 |
| 27 | 7 | 3 |
| 28 | 8 | 4 |
| 29 | 9 | 5 |
| 30 | 0 | 6 |
| 31 | 1 | 7 |
| 32 | 2 | 8 |
| 33 | 3 | 9 |
| 34 | 4 | 10 |
| 35 | 5 | 11 |
| 36 | 6 | 12 |
| 37 | 7 | 13 |
| 38 | 8 | 14 |
| 39 | 9 | 15 |
| 40 | 0 | 16 |
| 41 | 1 | 17 |
| 42 | 2 | 18 |
| 43 | 3 | 19 |
| **44** | **4** | **0** |
| 45 | 5 | 1 |
| 46 | 6 | 2 |

(continued)

| CRB | interlace index | Sub-CH index |
|---|---|---|
| 47 | 7 | 3 |
| 48 | 8 | 4 |
| 49 | 9 | 5 |
| 50 | 0 | 6 |
| 51 | 1 | 7 |
| 52 | 2 | 8 |
| 53 | 3 | 9 |
| 54 | 4 | 10 |
| 55 | 5 | 11 |
| 56 | 6 | 12 |
| 57 | 7 | 13 |
| 58 | 8 | 14 |
| 59 | 9 | 15 |
| 60 | 0 | 16 |
| 61 | 1 | 17 |
| 62 | 2 | 18 |
| 63 | 3 | 19 |
| **64** | **4** | **0** |
| 65 | 5 | 1 |
| 66 | 6 | 2 |
| 67 | 7 | 3 |
| 68 | 8 | 4 |
| 69 | 9 | 5 |
| 70 | 0 | 6 |
| 71 | 1 | 7 |
| 72 | 2 | 8 |
| 73 | 3 | 9 |
| 74 | 4 | 10 |
| 75 | 5 | 11 |
| 76 | 6 | 12 |
| 77 | 7 | 13 |
| 78 | 8 | 14 |
| 79 | 9 | 15 |
| 80 | 0 | 16 |
| 81 | 1 | 17 |
| 82 | 2 | 18 |
| 83 | 3 | 19 |
| 84 | 4 | |
| 85 | 5 | |

(continued)

| CRB | interlace index | Sub-CH index |
|-----|-----------------|--------------|
| 86  | 6               |              |

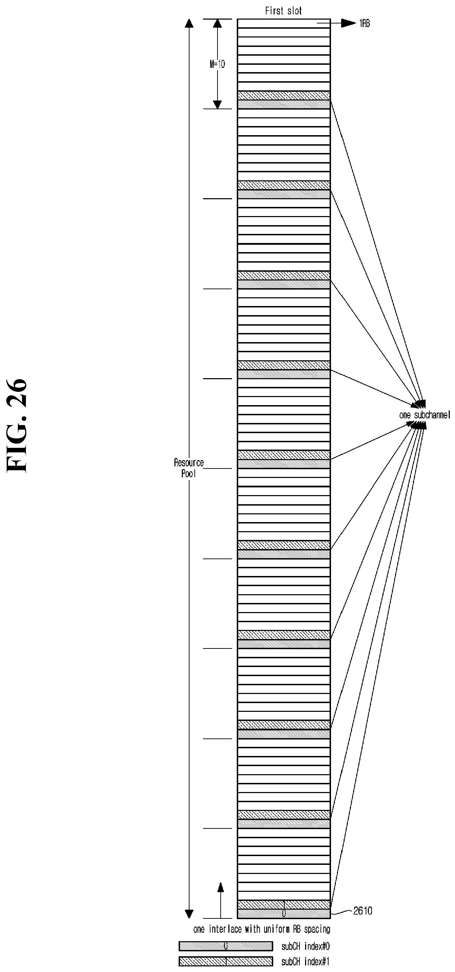

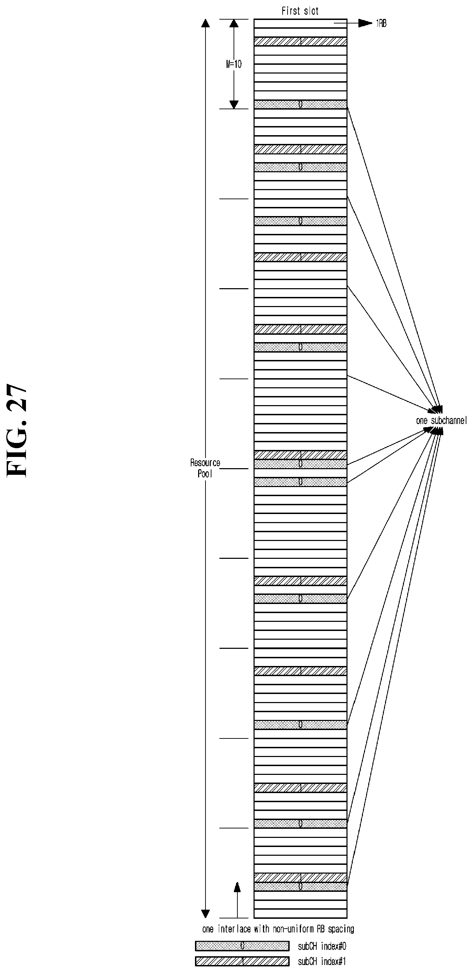

As still another example, FIGS. 26 and 27 illustrate an interlace structure applicable to the present disclosure.

FIG. 26 illustrates interlace assignment when M=10 based on 100 RBs in 15 kHz SCS. Here, N=10. That is, a single interlace may be mapped to a single subchannel. For example, it may be configured to be mapped to a lowest subchannel index based on an RB 2610 with a lowest interlace index in FIG. 26. That is, frequency resources corresponding to the lowest interlace index#0 among a total of 10 interlaces may be mapped to subchannel index #0. Also, frequency resources corresponding to subsequent interlace index #1 may be mapped to subchannel index #1. Also, remaining subchannel indexes #2 to #9 may be mapped based on the same method.

Here, for example, FIG. 26 may relate to the interlace structure with uniform RB spacing and may be the same as the aforementioned Option 1-A. On the other hand, FIG. 27 may relate to the interlace structure with non-uniform RB spacing and may be the same as Option 2-A.

Here, for example, referring to FIG. 26, a case in which different UEs perform communication adjacent interlace index (or subchannel index) may be considered. Here, there is a need to minimize in-band emission (IBE) effect that may occur based on sidelink communication between different UEs and, to this end, it may be advantageous to non-uniformly configure an interlace index interval. That is, there may be an advantage that it is possible to minimize the IBE effect between UEs present at adjacent locations based on the non-uniformly configured interlace structure.

Also, for example, as described above, both the uniform interlace structure and the non-uniform interlace structure may perform mapping between lowest subchannel indexes, starting from the lowest interlace index, according to the [N:M] ratio. That is, regardless of a different interlace mapping method of Option 1 or Option 2, interlace index-and-subchannel index mapping may differ according to the [N:M] ratio. For example, if N=1 : M=1, interlace index #0 and subchannel index #0 may be mapped as mutually associated resources. Also, subsequent interlace index #1 and subchannel index #1 may be mapped as mutually associated resources, which is described above.

**<Frequency resource assignment indication method for unlicensed band sidelink communication>**

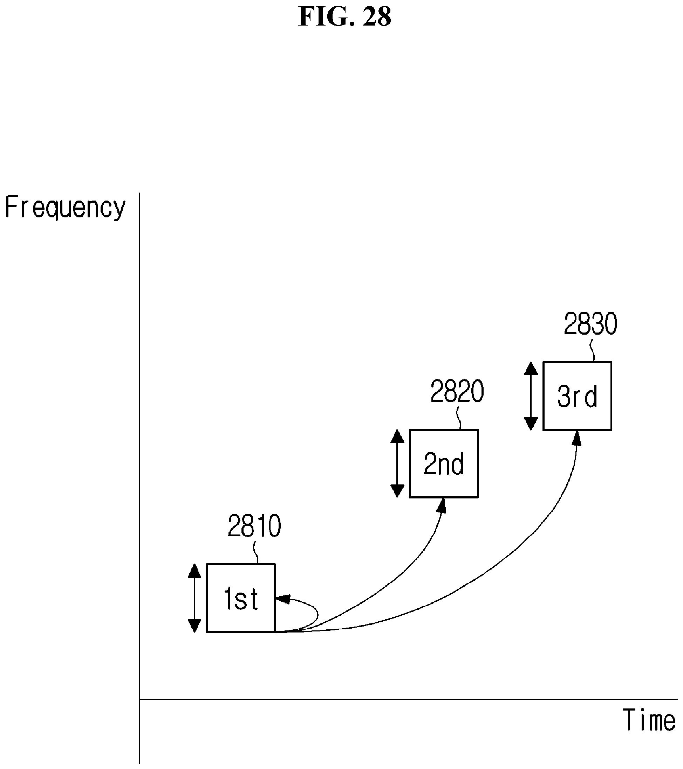

FIG. 28 illustrates a sidelink frequency resource assignment method applicable to the present disclosure. Referring to FIG. 28, an Rx UE that performs sidelink communication may receive sidelink control information (SCI) transmitted from a Tx UE. Here, the SCI may include a frequency resource assignment field and a time resource assignment field. Here, the Tx UE may indicate PSSCH resources in up to three slots through a frequency resource indication value (FRIV) indicated by the frequency resource assignment field and a time resource indication value (TRIV) indicted by the time resource assignment field. For example, maximum time/frequency resource assignment that may be indicated through SCI signaling may be two slots or three slots. Here, the maximum available time/frequency resources may be indicated in an RRC parameter (e.g., sl-MaxNumPerReserve) configured based on higher layer signaling.

For example, if sl-MaxNumPerReserve=2 based on higher layer signaling, the UE may indicate time/frequency resource reservation in up to two slots. As still another example, if sl-MaxNumPerReserve=3 based on higher layer signaling, the UE may indicate time/frequency resource reservation in up to three slots, which may be as shown in Table 23 below.

[Table 23]

| |
|---|
| - Nmax=2 (sl-MaxNumPerReserve=2 configured by higher layer signaling (RRC))<br>- Nmax=3 (sl-MaxNumPerReserve=3 configured by higher layer signaling (RRC)) |

The Rx UE may perform blind decoding for PSCCH reception in consideration of subchannel within Rx resource pool and available candidate PSCCH resource location. The Rx UE may decode first SCI (1st SCI) from resource 2810 in a first slot. The Rx UE may verify the allocated resource 2810 and subsequent reserved resources 2820 and 2830 based on resource assignment information in the first slot in which the first SCI is received. For example, based on the above, if Nmax=2, the Rx UE may verify the allocated resource 2810 and the resource 2820 allocated to the second slot as a subsequent reserved resource in the first slot. Also, if Nmax=3, the Rx UE may verify the allocated resource 2810 and the resource 2820 allocated to the second slot and the resource 2830 allocated to the third slot as subsequent reserved resources in the first slot. For example, the Rx UE may verify reserved resources through the time/frequency resource assignment field within the received SCI. As a detailed example, the FRIV within the SCI may indicate the same number of subchannels and different subchannel start in three slots.

In more detail, referring to FIG. 28, the Rx UE may acquire PSSCH transmission resource assignment reservation information in the second slot and the third slot through the SCI in the PSSCH received in the first slot. Here, the Rx UE may verify locations of the second slot and the third slot through a logical slot offset value based on the TRIV within the SCI based on the first slot. Also, frequency assignment information may be provided by indicating the same number of allocated subchannels and different subchannel start information for each slot through the FRIV.

Therefore, the Rx UE may receive the PSSCH by verifying time/frequency resource indication information field for receiving a transport block (TB) expected to be transmitted to the Rx UE through blind decoding in all the available subchannels from first SCI (PSCCH). Here, when an additional scheduling resource is present based on the SCI, the Rx UE may acquire second or second/third slot/frequency (subchannel) resource assignment information based on time/-frequency resource indication information. Then, the Rx UE may receive the intended PSCCH/PSSCH from the second or second/third slot/frequency (subchannel) resources based on resource assignment information.

Here, for example, a PSSCH transmission resource assignment method considering the unlicensed band may be considered. As described above, since the unlicensed band may perform transmission after occupying a channel based on an LBT, the PSSCH transmission resource assignment method considering the same may be required. For example, first SCI (PSCCH) may be transmitted based on a specific subchannel/interlace index in the first slot (resource). For example, a lowest subchannel index or a lowest interlace index may be determined as a start subchannel index or a start interlace index of first resource. Here, the Rx UE may verify the number of allocated subchannels ($L_{subCH}^{SL-U}$) through the FRIV within the received first SCI. Also, when at least one of the second slot and the third slot is configured and indicated, at least one of start subchannel indexes and interlace indexes of configured resources may be verified. Also, for example, the Rx UE may verify a signaling format.

Here, the total number of subchannels ($N_{subchannel}^{SL-U}$) within a single resource pool may be set to various values based on at least one of subcarrier spacing, the number of interlaces within the resource pool, and subchannel-to-interlace assignment relationship. For example, in the conventional sidelink signaling, the number of subchannels may be set to one value for one resource pool configuration. However, the corresponding value may be variously set by considering interlace-based RB resource configuration. As a detailed example, in 30 kHz SCS, if the number of interlaces is 5 and the subchannel-to-interlace number is 2, the total number of subchannels ($N_{subchannel}^{SL-U}$) within a single resource pool may be set to 2 or 3. Here, a signaling method may flexibly vary depending on what value is set for the total number of subchannels ($N_{subchannel}^{SL-U}$) within a single resource pool. However, the aforementioned configuration is only one example and may not be limited thereto.

As still another example, in sidelink communication, time resources used based on higher layer signaling may be determined as two slots or three slots. Here, subchannel-based frequency resource in the second slot or the second slot/third slot may be indicated based on SCI of the first slot.

For example, if sl-MaxNumPerReserve=2 (i.e., in the case of using two slots), the FRIV may indicate a frequency resource based on Equation 12 below. Here, if $N_{subchannel}^{SL-U}$ is greater than or equal to 'T,' the frequency resource may be indicated through the FRIV based on Equation 12 below. On the contrary, if $N_{subchannel}^{SL-U}$ is less than 'T,' the frequency resource may be indicated by applying a bitmap rather than the FRIV. Here, a length of the bitmap may be $N_{subchannel}^{SL-U}$. Here, a T value may be set to a specific value and may be a value determined depending on whether indication through the bitmap is more efficient than indication through the FRIV. As a detailed example, as described above, the number of subchannels within the resource pool may be differently determined according to the interlace-to-subchannel ratio [M:N]. Here, if a small number of subchannels are required based on the interlace-to-subchannel ratio [M:N], indication through the bitmap may be more efficient than indication through the FRIV. In consideration of the above, whether to apply the FRIV and whether to apply the bitmap may be determined based on the T value. Here, for example, the FRIV or the bitmap method may be ultimately applied according to a specific $N_{subchannel}^{SL-U}$ value without comparison between $N_{subchannel}^{SL-U}$ and the T value, depending on a subchannel configuration method, and is not limited to a specific embodiment.

[Equation 12]

$$FRIV = n_{subCH,1}^{start} + \sum_{i=1}^{L_{subCH}^{SL-U}-1}\left(N_{\text{subchannel}}^{SL-U} + 1 - i\right)$$

As still another example, if sl-MaxNumPerReserve = 3, (i.e., in the case of using three slots), the FRIV may indicate a frequency resource based on Equation 13 below. Here, if $N_{\text{subchannel}}^{S-U}$ is greater than or equal to 'T,' the frequency resource may be indicated through the FRIV based on Equation 13. On the contrary, if $N_{\text{subchannel}}^{SL-U}$ is less than 'T,' the frequency resource may be indicated through the bitmap. Here, the length of the bitmap may be $N_{\text{subchannel}}^{SL-U}$.

Here, for example, the FRIV or the bitmap method may be ultimately applied according to a specific $N_{\text{subchannel}}^{SL-U}$ value without comparison between $N_{\text{subchannel}}^{SL-U}$ and the T value, depending on a subchannel configuration method, and is not limited to a specific embodiment.

[Equation 13]

$$FRIV = n_{subCH,1}^{start} + n_{subCH,2}^{start} \cdot \left(N_{\text{subchannel}}^{SL-U} + 1 - L_{subCH}^{SL-U}\right) + \sum_{i=1}^{L_{subCH}^{SL-U}-1}\left(N_{\text{subchannel}}^{SL-U} + 1 - i\right)^2$$

In Equations 12 and 13, $n_{subCH,1}^{start}$ may be a start subchannel index for second slot resource. Also, in Equation 13, $n_{subCH,2}^{start}$ may be a start subchannel index for third slot resource. Also, in Equation 12 and Equation 13, $N_{\text{subchannel}}^{SL-U}$ may be the total number of interlace assignment-based subchannels configured by a higher layer based on at least one of CRB-to-interlace assignment and interlace-subchannel assignment in a single resource pool. Also, for example, $L_{subCH}^{SL-U}$ refers to the number of actually allocated interlace assignment-based subchannels and may be determined within 1 to $N_{\text{subchannel}}^{SL-U}$.

As still another example, one or more RBSs may be configured in a single resource pool. An RBS that actually transmits a PSSCH may be determined among the one or more RBSs configured in the resource pool and a method of indicating this may be required. For example, since the PSSCH may be transmitted through consecutive RBSs, consecutive RBS indexes may be indicated through the RIV. Here, the number of bits for the maximum possible RBS indication field may be determined based on the maximum number of configured RBSs and the RIV with the frequency resource assignment field within the SCI format.

Also, for example, a case in which a higher layer parameter indicating subchannel-based SL-U PSCCH/PSSCH transmission with the interlace structure is configured in frequency resource assignment within the SCI format (e.g., SCI format 1-A) may be considered. Here, if higher layer parameter sl-MaxNumPerReserve = 2, bits of the frequency resource assignment field may be determined based on Equation 14 below. Here, if $N_{\text{subchannel}}^{SL-U}$ length is equal to 'T,' bits may be determined based on Equation 14 below. On the contrary, if $N_{\text{subchannel}}^{SL-U}$ length is less than 'T,' $N_{\text{subchannel}}^{SL-U}$ bits may be used based on the bitmap.

[Equation 14]

$$\left\lceil \log_2\left(\frac{N_{\text{subChannel}}^{\text{SL-U}}\left(N_{\text{subChannel}}^{\text{SL-U}} + 1\right)}{2}\right)\right\rceil \text{ bits}$$

As still another example, if higher layer parameter sl-MaxNumPerReserve = 3, bits of the frequency resource assignment field may be determined based on Equation 15 below. Here, if $N_{\text{subchannel}}^{SL-U}$ length is equal to 'T,' bits may be determined based on Equation 15. Bitmap $N_{\text{subchannel}}^{SL-U}$ may be used. On the contrary, if $N_{\text{subchannel}}^{SL-U}$ length is less than 'T,' $N_{\text{subchannel}}^{SL-U}$ bits may be used based on the bitmap. Here, as described above, the T value may be a value that is selected by considering that the bitmap length is more efficient than the RIV.

[Equation 15]

$$\left\lceil \log_2\left(\frac{N_{\text{subChannel}}^{\text{SL-U}}\left(N_{\text{subChannel}}^{\text{SL-U}} + 1\right)\left(2N_{\text{subChannel}}^{\text{SL-U}} + 1\right)}{6}\right)\right\rceil \text{ bits}$$

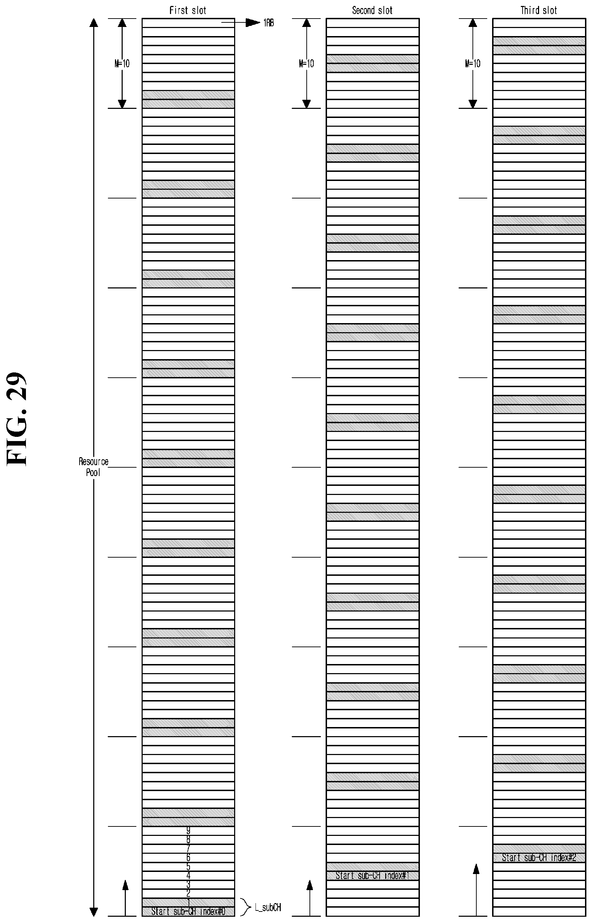

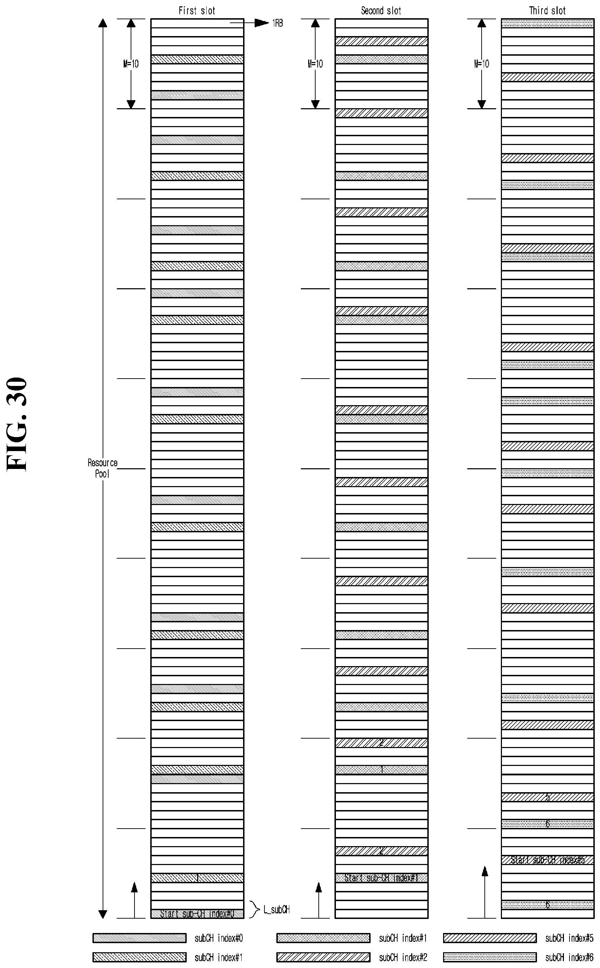

FIG. 29 illustrates a uniform interlace structure-based frequency resource assignment method applicable to the present disclosure. Also, FIG. 30 illustrates a non-uniform interlace structure-based frequency resource assignment method applicable to the present disclosure.

FIGS. 29 and 30 may be a frequency assignment method for three slots based on a case in which sl-MaxNumPerReserve is set to 3. Also, FIGS. 29 and 30 may be a case in which a single resource pool based on an interlace index and a subchannel index set based on Table 24 below. However, FIGS. 29 and 30 are only examples for clarity of description and may not be limited to the aforementioned embodiment.

[Table 24]

| |
| --- |
| - 1 Subchannel = k interlace index (k=1)<br>- M interlace = N RB (number of interlaces (M=10) and number of RBs per interlace (N=10))<br>- Maximum number of slots that may be scheduled through one SCI signaling: Nmax=3 (sl-MaxNumPerReserve=3 configured by higher layer signaling (RRC)<br>- resources in resource pool within SL BWP are based on improved interlace-subchannel assignment structure |

In detail, referring to FIG. 29, resources may be allocated based on subchannel index. Here, a subchannel index and an interlace index may be the same as described above with reference to FIG. 26. As still another example, resource assignment may be performed through the interlace index based on an interlace-based RB assignment method. For example, resource assignment may identify at least one of a first available interlace index (i.e., interlace index = 4) corresponding to a lowest interlace index (or CRB index included in the lowest interlace index) and an associated lowest subchannel index (i.e., subchannel index = 0) through resource pool configuration within SL BWP in the frequency domain. Here, the total number of available interlaces/subchannels within the corresponding resource pool may be determined through interlaces/subchannels corresponding to resource pool configuration and an intersection of interlaces/subchannels.

For example, the number of interlaces within the carrier bandwidth may be determined based on frequency band, SCS, LBT BW (RBS BW), and carrier bandwidth. Here, the number of interlaces may be determined in advance or may be configured through higher layer signaling, and is not limited to a specific embodiment. Also, for example, information as shown in Table 25 below for frequency resource assignment for the sidelink unlicensed band may be configured in the UE through higher layer signaling and is not limited to a specific embodiment.

[Table 25]

| |
|---|
| - SL RB set index; <br> - SL interlace index (or subchannel index with interlace PRB mapping), <br> - [2nd slot] if Nmax=2 (sl-MaxNumPerReserve=2 configured by higher layer signaling (RRC)) or <br> - [2nd slot only, or 2nd slot and 3rd slot] frequency resource reservation if Nmax=3 (sl-MaxNumPerReserve=3 configured by higher layer signaling (RRC)) <br> - COT duration indication |

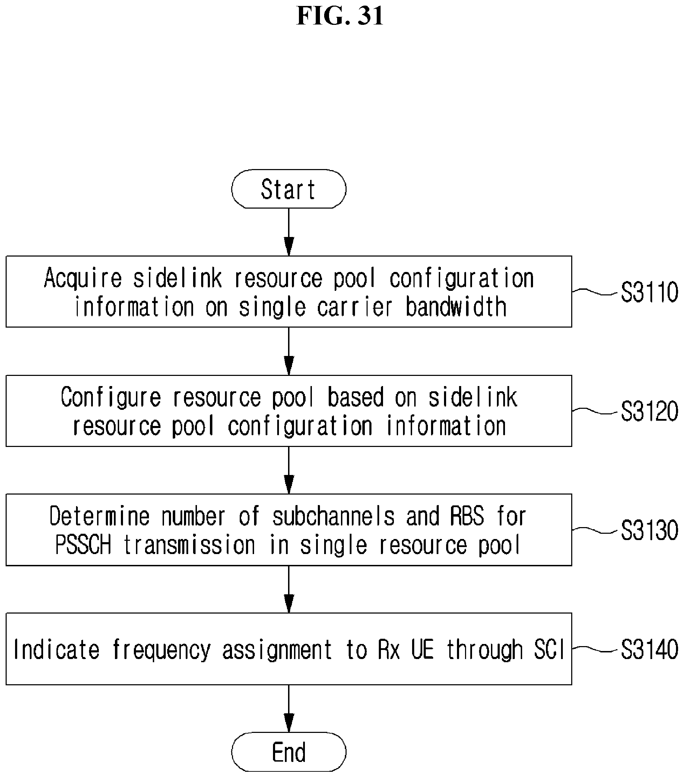

FIG. 31 is a flowchart illustrating a method of assigning sidelink unlicensed band frequency resources applicable to the present disclosure. Referring to FIG. 31, a UE may acquire resource information on a sidelink unlicensed band of a single carrier bandwidth (S3110). Here, resource pool information for the sidelink unlicensed band may be provided to the UE based on at least one of RBS configuration/index information and interlace/subchannel-based configuration information. Here, for example, in the resource pool configuration operation of the sidelink unlicensed band, the resource pool of the sidelink unlicensed band may include consecutive frequency resources (Case 1). As still another example, from the resource pool configuration operation of the sidelink unlicensed band, the resource pool of the sidelink unlicensed band may be nonconsecutively configured in consideration of an interlace structure (Case 2). However, in all of the aforementioned cases, an interlace-based frequency resource assignment method may be considered. Here, the resource pool of the sidelink unlicensed band may be configured with interlace-based RB resources in consideration of CRB-to-sidelink interlace index mapping relationship. Also, corresponding sidelink interlace(s) may be mapped to a subchannel. Here, for example, CRB-to-interlace index(es) may be uniformly allocated based on an interval (M) (Option 1). As still another example, CRB-to-interlace index(es) may be non-uniformly and nonconsecutively allocated (Option 2). Also, each of subchannel indexes constituting a single resource pool may be mapped to consecutive sidelink interlace index(es) (Option A). As still another example, each of subchannel indexes constituting a single resource pool may be mapped to nonconsecutive sidelink interlace index(es), which is described above (Option B).

The sidelink unlicensed band resource pool may be configured based on resource pool configuration information of the sidelink unlicensed band (S3120), and the number of subchannels and an RBS for PSSCH transmission in the resource pool of a single sidelink unlicensed band may be determined (S3130). Then, a Tx UE may provide information on the determined number of subchannels and RBS for PSSCH transmission to an Rx UE through SCI (corresponding to at least one of PSCCH and 2nd SCI) (S3140). Here, for example, the maximum number of available slots based on SCI of a first slot may be provided to the UE by higher layer configuration. For example, the maximum number of available slots may be 2 or 3. Therefore, the Tx UE may transmit PSSCH/PSCCH to the Rx UE through the first slot and a second slot or through the first slot, the second slot, and a third slot. Here, frequency resource assignment information included in SCI may indicate different subchannel start information and the same number of subchannels for all slots based on the maximum number of available slots. Here, the number of subchannels for a single resource pool refers to the number of interlace-based subchannels and may be set to various values in consideration of at least one of SCS, the number of interlaces within the corresponding resource pool, and subchannel-to-interlace assignment relationship. Also, at least one RBS may be configured in a single resource pool. Here, an RBS used for PSSCH transmission among RBSs configured in the resource pool may be indicated by SCI signaling. For example, the RBS used for PSSCH transmission may be indicated to the Rx UE based on a start RBS and the number of consecutive RBSs. Then, the Tx UE and the Rx UE may perform sidelink communication in the sidelink unlicensed band based on frequency resource information.

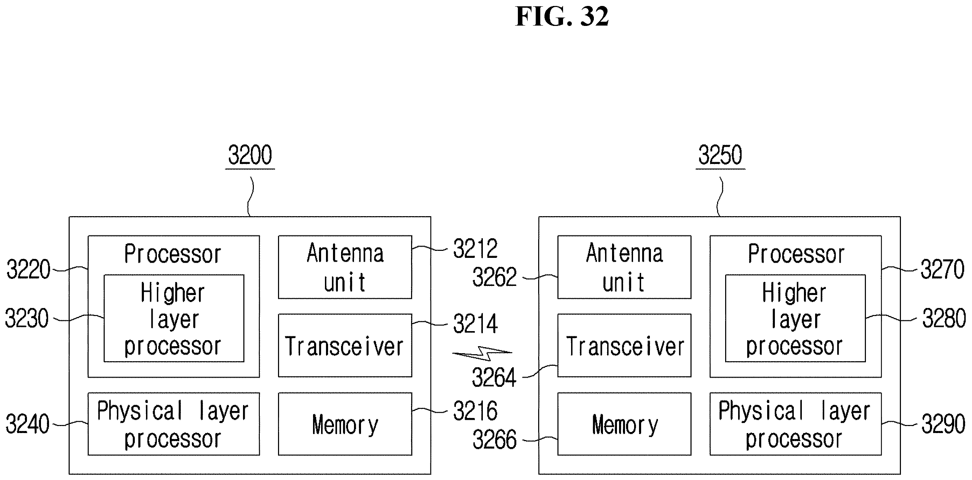

FIG. 32 is a diagram illustrating a base station apparatus and a UE apparatus to which the present disclosure may be applied.

The base station device 3200 may include a processor 3220, an antenna unit 3212, a transceiver 3214, and a memory 3216.

The processor 3220 performs a baseband-related signal processing and may include a higher layer processor 3230 and a physical layer processor 3240. The higher layer processor 3230 may process the operation of a medium access control (MAC) layer, a radio resource control (RRC) layer, or a higher layer thereof. The physical layer processor 3240 may process the operation of the physical (PHY) layer (e.g., uplink receive signal processing, downlink transmission signal processing). Also, to perform baseband-related signal processing, the processor 3220 may also control the operation of the base station device 3200 as a whole.

The antenna unit 3212 may include one or more physical antennas, and may support the multiple input multiple output (MIMO) transmission and reception in the case of including a plurality of antennas. Also, beamforming can be supported.

The memory 3216 may store computationally processed information of the processor 3220, software, operating systems, applications, and the like related to the operation of the base station device 3200, and may include components such as buffers.

The processor 3220 of the base station 3200 may be configured to implement the operation of the base station in the example described herein.

The UE device 3250 may include a processor 3270, an antenna unit 3262, a transceiver 3264, and a memory 3266. For example, herein, the UE device 3250 may perform communication with the base station device 3200. As another example, herein, the UE device 3250 may perform SL communication with another UE device. That is, the UE device 3250 used herein refers to a device capable of communicating with at least one of the base station device 3200 and the other UE devices and is not limited to communication with a specific device.

The processor 3270 performs baseband-related signal processing and may include a higher layer processor 3280 and a physical layer processor 3290. The higher layer processor 3280 may process the operation of the MAC layer, the RRC layer, or the higher layer. The physical layer processor 3290 may process the operations of the PHY layer (e.g., downlink receive signal processing, uplink transmission signal processing). Also, to perform baseband-related signal processing, the processor 3270 may also control the operation of the UE device 3250 as a whole.

The antenna unit 3262 may include one or more physical antennas, and may support MIMO transmission and reception in the case of including a plurality of antennas. Also, beamforming can be supported.

The memory 3266 may store computationally processed information of the processor 3270, software, operating systems, applications, and the like related to the operation of the UE device 3250, and may include components such as buffers.

The terminal device 3250 according to an example of the present disclosure may be associated with a vehicle. For example, the terminal device 3250 may be integrated in the vehicle, may be located in the vehicle, or may be located on the vehicle. Also, the terminal device 3250 according to the present disclosure may be the vehicle itself. Also, the terminal device 3250 according to the present disclosure may be at least one of a wearable terminal, AR/VR, an Internet of things (IoT) terminal, a robot terminal, and a public safety terminal. The terminal device 3250 to which the present disclosure may apply may include various types of communication devices that support an interactive service using sidelink, for services, for example, Internet access, service execution, navigation, real-time information, autonomous driving, and safety-and-risk diagnosis. Also, the terminal device 3250 may include an AR/VR device capable of performing a sidelink operation or any type of communication devices capable of performing a relay operation as a sensor.

Here, the vehicle to which the present disclosure applies may include an autonomous vehicle, a semi-autonomous vehicle, and a non-autonomous vehicle. Meanwhile, although the terminal device 3250 according to an example of the present disclosure is described in association with the vehicle, at least one of the UEs may not be associated with the vehicle. It is provided as an example only and should not be interpreted to limit application of the present disclosure.

Also, the terminal device 3250 according to an example of the present disclosure may include various types of communication devices capable of performing cooperation that supports an interactive service using sidelink. That is, the terminal device 3250 may directly support the interactive service using the sidelink and may be employed as a cooperation device for supporting the interactive service using the sidelink.

Also, for example, the terminal device 3250 may acquire resource information on a sidelink unlicensed band of a single carrier bandwidth. Here, resource pool information for the sidelink unlicensed band may be provided to the terminal device 3250 based on at least one of RBS configuration/index information and interlace/subchannel-based configuration information. Here, for example, in the resource pool configuration operation of the sidelink unlicensed band, the resource pool of the sidelink unlicensed band may include consecutive frequency resources (Case 1). As still another example, from the resource pool configuration operation of the sidelink unlicensed band, the resource pool of the sidelink unlicensed band may be nonconsecutively configured in consideration of an interlace structure (Case 2). However, in all of the aforementioned cases, an interlace-based frequency resource assignment method may be considered. Here, the resource pool of the sidelink unlicensed band may be configured with interlace-based RB resources in consideration of CRB-to-sidelink interlace index mapping relationship. Also, corresponding sidelink interlace(s) may be mapped to a subchannel. Here, for example, CRB-to-interlace index(es) may be uniformly allocated based on an interval (M) (Option 1). As still another example, CRB-to interlace index(es) may be non-uniformly and nonconsecutively allocated (Option 2). Also, each of subchannel indexes constituting a single resource pool may be mapped to consecutive sidelink interlace index(es) (Option A). As still another example, each of subchannel indexes constituting a single resource pool may be mapped to nonconsecutive sidelink interlace index(es), which is described above (Option B).

The sidelink unlicensed band resource pool may be configured based on resource pool configuration information of the sidelink unlicensed band, and the number of subchannels and an RBS for PSSCH transmission in the resource pool of a single sidelink unlicensed band may be determined. Then, the terminal device 3250 may provide information on the determined number of subchannels and RBS for PSSCH transmission to another terminal device through SCI. Here, for example, the maximum number of available slots based on SCI of a first slot may be provided to the UE by higher layer configuration. For example, the maximum number of available slots may be 2 or 3. Therefore, the Tx UE may transmit PSSCH to the Rx UE through the first slot and a second slot or through the first slot, the second slot, and a third slot. Here, frequency resource assignment information included in SCI may indicate different subchannel start information and the same number of subchannels for all slots based on the maximum number of available slots. Here, the number of subchannels for a single resource pool refers to the number of interlace-based subchannels and may be set to various values in consideration of at least one of SCS, the number of interlaces within the corresponding resource pool, and subchannel-to-interlace assignment relationship. Also, at least one RBS may be configured in a single resource pool. Here, an RBS used for PSSCH transmission among RBSs configured in the resource pool may be indicated. For example, as described above, the RBS used for PSSCH transmission may be indicated to the Rx UE based on a start RBS and the number of consecutive RBSs. Then, the Tx UE and the Rx UE may perform sidelink communication in the sidelink unlicensed band based on frequency resource information.

Also, various embodiments of the present disclosure may be implemented by hardware, firmware, software, or combination thereof. In the case of implementation by hardware, the embodiments may be implemented by one or more application-specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present disclosure includes software or machine-executable instructions (e.g., OS, application, firmware, program, etc.) such that the operations according to the method of various embodiments may be executed on an apparatus or a computer, and a non-transitory computer-readable medium storing such software or instructions to be executable on the apparatus or the computer.

Various embodiments of the present disclosure are to explain the representative aspects of the present disclosure rather than listing all the possible combinations and matters described in the various embodiments may be applied alone or in combination of two or more embodiments.

INDUSTRIAL APPLICABILITY

The above may also be applied to other systems.

**Claims**

1. A method of configuring a sidelink resource pool in a user equipment (UE) in a wireless communication system, the method comprising:

   receiving, by the UE, resource pool configuration information from a base station based on higher layer signaling;
   transmitting sidelink control information (SCI) to another UE based on the resource pool configuration information; and
   performing sidelink communication with the other UE,
   wherein the resource pool configuration information is information that is based on sidelink resource pool configuration of an unlicensed band.

2. The method of claim 1, wherein the sidelink resource pool configuration information of the unlicensed band includes at least one of resource block set (RBS) configuration and index information, interlace configuration and index information, and subchannel configuration and index information based on a single sidelink bandwidth part (SL BWP) in a single carrier bandwidth.

3. The method of claim 2, wherein common resource block (CRB)-to-interlace index mapping and interlace index-to-subchannel index mapping are determined based on the sidelink resource pool configuration information of the unlicensed band.

4. The method of claim 1, wherein the number of channels of a resource and an RBS used to perform physical sidelink shared channel (PSSCH) transmission in a sidelink resource pool are indicated based on the SCI.

5. The method of claim 4, wherein the number of subchannels of the resource is determined as one of a plurality of values based on at least one of subcarrier spacing (SCS), the number of interlaces within the sidelink resource pool, and subchannel-to-interlace allocation relationship.

# FIG. 1

| Downlink frame *i* |
|---|

| Uplink frame *i* |
|---|

$N_{TA} T_s$

# FIG. 2

One sub frame

$N_{\text{sub frame}}^{\text{symbols}\mu}$ OFDM symbols

$k = N_{RB}^{\mu}\ N_{sc}^{RB} - 1$

Resource block

Resource element
$-(k,\bar{l})$ in resource grid
$-(k,l)$ in resource block

$N_{RB}^{\mu}\ N_{sc}^{RB}$ subcarriers

$N_{sc}^{RB}$ subcarriers

$l = 0$

$\bar{l} = 14 \cdot 2^{\mu} - 1$

$k = 0$

# FIG. 3

FIG. 4

C-V2X

| V2V | Reserved | Reserved | Tolling | Control | I2V | PVD/ Security |
|------|----------|----------|---------|---------|-----|---------------|
| CH 1 | CH 2 | CH 3 | CH 4 | CH 5 | CH 6 | CH 7 |

5,855    5,865    5,875    5,885    5,895    5,905    5,915    5,925 MHz

EP 4 561 238 A1

# FIG. 5

sl-TimeResource(length = $L_{bitmap}$)
(e.g.,0011111100)

Frequency(RBs)

sl-RB-Number

sl-StartRBsubchannel

Time(slots)

sl-SubchannelSize

10240 x $2^\mu$

SL BWP
Excluded RB
Reserved slot
Excluded slot
SSB slot

EP 4 561 238 A1

# FIG. 6

Korea: 17 dBm | DFS, TPC | 23 dBm DFS, TPC

China: DFS, TPC | DFS, TPC | 27 dBm

Japan: LBT | DFS, TPC, LBT | DFS, TPC, LBT

US: 30 dBm | DFS, TPC | (under study) | DFS, TPC | (under study) | (under study)

EU: LST | DFS, TPC, LBT | (under study) | DFS, TPC, LBT | (under study) | ITS | (under study)

f(MHz)

5150 5250 5350 5470 5750 5825 5925 6425 7125

Indoor, typ.23 dBm

Indoor or outdoor, typically 30 dBm

6 GHz band, under study

EP 4 561 238 A1

**FIG. 7**

EP 4 561 238 A1

| U-NII-1<br>(100 MHz) | U-NII-2A<br>(100 MHz) | U-NII-2B<br>(120 MHz) | U-NII-2C<br>(255 MHz) | U-NII-3<br>(100 MHz)<br><br>Part 15.247 Rules<br>(125 MHz) | 25 MHz | U-NII-4<br>(75 MHz) |
|---|---|---|---|---|---|---|

5.150 GHz    5.250 GHz    5.350 GHz    5.470 GHz                              5.725 GHz       5.850 GHz   5.925 GHz

# FIG. 8

FIG. 9

$$RB_{s,x}^{start,\mu} = N_{grid,x}^{start,\mu} + \begin{cases} 0 & s = 0 \\ GB_{s-1,x}^{start,\mu} + GB_{s-1,x}^{size,\mu} & otherwise \end{cases}$$

$$RB_{s,x}^{end,\mu} = N_{grid,x}^{start,\mu} + \begin{cases} N_{grid,x}^{size,\mu} & s = N_{RB-set,x}-1 \\ GB_{s,x}^{start,\mu} & otherwise \end{cases}$$

$$N_{BWP,i}^{size,\mu} = RB_{s1,uplink}^{end,\mu} - RB_{s0,uplink}^{start,\mu}$$

$$N_{BWP,i}^{start,\mu} = RB_{s0,uplink}^{start,\mu}$$

Carrier bandwidth

LBT bandwidth(RB set1,s1) — 911

$RB_{s1,uplink}^{end,\mu}$

913 — nrofCRB(0..15)

Guardband

$RB_{s1,uplink}^{start,\mu}$

startCRB(0..274), $GB_{s0,x}^{start,\mu}$

$RB_{s0,uplink}^{end,\mu}$

LBT bandwidth(RB set0,s0) — 912

$RB_{s0,uplink}^{start,\mu}$

BWP 3 — 923

BWP 2 — 922

BWP 1 — 921

EP 4 561 238 A1

**FIG. 10**

EP 4 561 238 A1

# FIG. 11

```
                                          S1110
           ┌──────────────────────────┐
           │   Wait until idle for    │
           │   T_d = 16 + m · 9μs     │
           └──────────────────────────┘
                         │            S1120
           ┌──────────────────────────┐
           │   Initialize backoff     │
           │   counter N ∈ {0,CW}     │
           └──────────────────────────┘
                         │
                         ▼            S1130
                  ╱────────────╲           Y
          ───────⟨   N = 0?     ⟩──────────► Transmit
                  ╲────────────╱
                         │ N          S1140
           ┌──────────────────────────┐
           │   Decrement counter N     │
           └──────────────────────────┘
                         │
                         ▼            S1150
              Y   ╱────────────╲
          ◄──────⟨ Channel idle ⟩
                  ╲  for 9μs?  ╱
                         │ N          S1160
           ┌──────────────────────────┐
           │   Wait until idle for    │
           │   T_d = 16 + m · 9μs     │
           └──────────────────────────┘
```

**FIG. 12**

Type 2A, B or C depending on gap size     <25 µs(Type 2B or 2C)

| | DL data | UL data | DL data |

Type 1       COT

## FIG. 13

OFDM symbol

Cyclic extension

Uplink

$C_2 T_{symb} - T_{TA} - 16\ \mu s$

$T_{TA}$

Downlink

At device

Uplink

16 μs gap

Downlink

At gNB

EP 4 561 238 A1

# FIG. 14

**FIG. 15**

EP 4 561 238 A1

EP 4 561 238 A1

## FIG. 16

**FIG. 17**

**FIG. 18**

EP 4 561 238 A1

**FIG. 19**

SL BWP

| LBT BW (RBS#0) | Gap band | LBT BW (RBS#1) | Gap band | LBT BW (RBS#2) | Gap band | LBT BW (RBS#3) |

1910 Configuration#0 — SL resource pool#0

1920 Configuration#1 — SL resource pool#0 | SL resource pool#1

1930 Configuration#2 — SL resource pool#0 | SL resource pool#1 | SL resource pool#2 | SL resource pool#3

1940 Configuration#3 — SL resource pool#0 | SL resource pool#1 | SL resource pool#2

1950 Configuration#4 — SL resource pool#0 | SL resource pool#1

EP 4 561 238 A1

**FIG. 20**

**FIG. 21**

# FIG. 22

SL-U BWP

SL-U Resource Pool

Point A

RBS#0    Gap band    RBS#1

CRB  | 0 | 1 | 2 | 3 | 4 | 5 | 6 | 7 | • • • | 45 46 47 48 49 | • • • | 85 86 87 88 89 | • • •

2220

Interleaved Interlace index  • • • | 2 3 4 0 1 |  • • •  | 4 3 0 2 1 |  • • •

Sub-CH index  | 2 3 4 0 1 |  • • •  | 4 3 0 2 1 |  • • •

Sub-CH#0    Sub-CH#1

EP 4 561 238 A1

# FIG. 23

{4, 3, 2, 1, 0} ⟹ $\xrightarrow{\text{Write/Read}}$ {4, 3, 2, 1, 0}

(a)

{0, 1, 2, 3, 4} ⟹ $\left\{\begin{array}{ccc} 0 & 1 & 2 \\ 3 & 4 & x \end{array}\right\}$  Write, Read

(b)

{0, 1, 2, 3, 4} ⟹ $\left\{\begin{array}{cc} 0 & 1 \\ 2 & 3 \\ 4 & x \end{array}\right\}$  Write, Read

(c)

{0, 1, 2, 3, 4} ⟹ Write $\left\{\begin{array}{c} 0 \\ 1 \\ 2 \\ 3 \\ 4 \end{array}\right\}$ Read

(d)

EP 4 561 238 A1

# FIG. 24

Interlace index RB      0 1 2 3 4 l 0 1 2 3 4 l 0 1 2 3 4
                         K=0              K=1              K=2

$$\left\{\begin{array}{cc} 0 & 1 \\ 2 & 3 \\ 4 & x \end{array}\right\} \text{Interleaving}$$

$$\left\{\begin{pmatrix} 0 & 1 & 2 \\ 3 & 4 & X \end{pmatrix} + C(i)\right\} \bmod 5$$

⟹

0, 1, 2, 3, 4

3, 3, 1, 4, 2

7, 10, 8, 11, 9

2, 0, 3, 1, 4

K=0

Interleaving

Random offset

mod M

4, 2, 0, 3, 1

K=1

**FIG. 25**

# FIG. 26

**FIG. 27**

# FIG. 28

# FIG. 29

# FIG. 30

# FIG. 31

Start

Acquire sidelink resource pool configuration
information on single carrier bandwidth — S3110

Configure resource pool based on sidelink
resource pool configuration information — S3120

Determine number of subchannels and RBS for
PSSCH transmission in single resource pool — S3130

Indicate frequency assignment to Rx UE through SCI — S3140

End

## FIG. 32

## INTERNATIONAL SEARCH REPORT

| International application No. |
|---|
| **PCT/KR2023/008928** |

### A. CLASSIFICATION OF SUBJECT MATTER

**H04W 72/20**(2023.01)i; **H04W 72/04**(2009.01)i; **H04W 72/12**(2009.01)i; **H04W 4/40**(2018.01)i; **H04W 92/18**(2009.01)i; **H04L 5/00**(2006.01)i; **H04L 27/26**(2006.01)i

According to International Patent Classification (IPC) or to both national classification and IPC

### B. FIELDS SEARCHED

Minimum documentation searched (classification system followed by classification symbols)

H04W 72/20(2023.01); H04L 1/18(2006.01); H04L 5/00(2006.01); H04W 52/02(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크 자원 풀 설정(sidelink resource pool configuration), SCI, 비면허 대역 (unlicensed band), SL BWP, RBS(resource block set), 인터레이스(interlace), 서브채널(sub-channel), CRB(common resource block), 매핑(mapping), PSSCH, SCS

### C. DOCUMENTS CONSIDERED TO BE RELEVANT

| Category* | Citation of document, with indication, where appropriate, of the relevant passages | Relevant to claim No. |
|---|---|---|
| X | US 2022-0110141 A1 (QUALCOMM INCORPORATED) 07 April 2022 (2022-04-07)<br>See paragraph [0102]; and figure 6. | 1 |
| Y | | 2-5 |
| Y | OPPO. Physical channel designs of NR sidelink in unlicensed channel. R1-2203983, 3GPP TSG-RAN WG1 Meeting #109-e, e-Meeting. 29 April 2022.<br>See sections 2.1-2.2; and figure 5. | 2-5 |
| X | US 2022-0110107 A1 (QUALCOMM INCORPORATED) 07 April 2022 (2022-04-07)<br>See paragraphs [0098] and [0118]-[0121]; and figure 8. | 1 |
| X | WO 2022-016545 A1 (GUANGDONG OPPO MOBILE TELECOMMUNICATIONS CORP., LTD.) 27 January 2022 (2022-01-27)<br>See claims 1 and 9-13. | 1 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 September 2023** | **12 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/008928** |

**C. DOCUMENTS CONSIDERED TO BE RELEVANT**

| Category* | Citation of document, with indication, where appropriate, of the relevant passages | Relevant to claim No. |
| --- | --- | --- |
| A | ZTE et al. Discussion on physical layer structures and procedures for SL-U. R1-2203366, 3GPP TSG RAN WG1 #109-e, e-Meeting. 29 April 2022.<br>See sections 2.1-2.4. | 1-5 |

Form PCT/ISA/210 (second sheet) (July 2022)

## INTERNATIONAL SEARCH REPORT
### Information on patent family members

International application No.

**PCT/KR2023/008928**

| Patent document cited in search report | | | Publication date (day/month/year) | Patent family member(s) | | | Publication date (day/month/year) |
|---|---|---|---|---|---|---|---|
| US | 2022-0110141 | A1 | 07 April 2022 | CN | 116235563 | A | 06 June 2023 |
| | | | | EP | 4223045 | A1 | 09 August 2023 |
| | | | | WO | 2022-072151 | A1 | 07 April 2022 |
| US | 2022-0110107 | A1 | 07 April 2022 | CN | 116250309 | A | 09 June 2023 |
| | | | | EP | 4223033 | A1 | 09 August 2023 |
| | | | | WO | 2022-072742 | A1 | 07 April 2022 |
| WO | 2022-016545 | A1 | 27 January 2022 | CN | 115843461 | A | 24 March 2023 |
| | | | | EP | 4187824 | A1 | 31 May 2023 |
| | | | | US | 2023-0138096 | A1 | 04 May 2023 |

Form PCT/ISA/210 (patent family annex) (July 2022)